(19) Europäisches Patentamt
European Patent Office
Office européen des brevets

(11) **EP 4 339 221 A1**

(12) **EUROPEAN PATENT APPLICATION**
published in accordance with Art. 153(4) EPC

(43) Date of publication:
**20.03.2024 Bulletin 2024/12**

(21) Application number: **22807146.0**

(22) Date of filing: **10.03.2022**

(51) International Patent Classification (IPC):
***C08G 59/52*** *(2006.01)* ***C08G 63/685*** *(2006.01)*
***C08G 63/91*** *(2006.01)*

(52) Cooperative Patent Classification (CPC):
**C08G 59/52; C08G 63/685; C08G 63/91**

(86) International application number:
**PCT/JP2022/010626**

(87) International publication number:
**WO 2022/239439 (17.11.2022 Gazette 2022/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.05.2021 JP 2021079856**

(71) Applicants:
- **Nagoya Institute Of Technology**
  **Nagoya-shi, Aichi 466-8555 (JP)**
- **TOYOBO CO., LTD.**
  **Osaka-shi, Osaka 530-0001 (JP)**

(72) Inventors:
- **HAYASHI, Mikihiro**
  **Nagoya-shi, Aichi 466-8555 (JP)**
- **INABA, Takaya**
  **Nagoya-shi, Aichi 466-8555 (JP)**
- **UCHIYAMA, Shoko**
  **Otsu-shi, Shiga 520-0292 (JP)**

(74) Representative: **Müller-Boré & Partner Patentanwälte PartG mbB**
**Friedenheimer Brücke 21**
**80639 München (DE)**

# (54) AMINATED POLYESTER RESIN AND CROSSLINKED AMINATED POLYESTER RESIN

(57) An object is to provide a crosslinked polyester resin that does not lose bond exchange activity even when immersed in water, an organic solvent, or the like and in which bond exchange is fast. Another object is to provide a polyester resin in which bond exchange is fast.

A crosslinked polyester resin in which a polyester resin having a plurality of side chains each having a carboxy group and a plurality of side chains each having a tertiary amino group is crosslinked by an epoxy-based crosslinking agent having a plurality of epoxy groups.

[FIG.5]

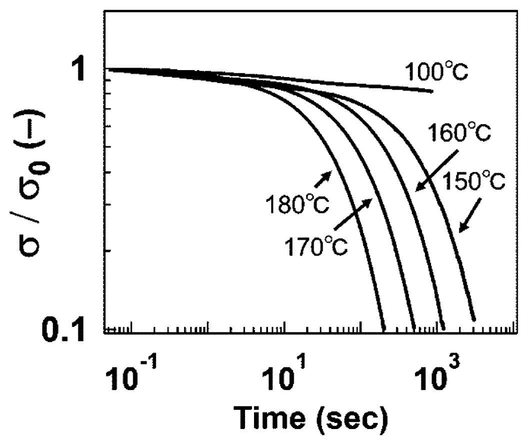


EP 4 339 221 A1

## Description

TECHNICAL FIELD

The present invention relates to a polyester resin and a polyester resin that is crosslinked (hereinafter, referred to as crosslinked polyester resin).

BACKGROUND ART

Covalently crosslinked polymer elastomers cannot be remolded or recycled under normal circumstances. This is due to the irreversibility of covalent crosslinking points. In response to this problem, bond exchange-type dynamically covalently crosslinkable resins have recently attracted attention.

The above bond exchange-type dynamically covalently crosslinkable resins require the addition of a bond exchange activation catalyst. For example, in Non-Patent Document 1, in a resin in which a polyester resin having a carboxy group (COOH) on a side chain is crosslinked by an epoxy crosslinking agent, zinc acetate ($Zn(OAc)_2$) is added as a bond exchange activation catalyst. However, in the example of using the bond exchange activation catalyst, there is a concern that the bond exchange activity may be lost due to leaching of the catalyst by immersion in (or contact with) water, an organic solvent, or the like. In addition, there is also a concern about a decrease in catalytic activity after the elapse of a long period of time.

In response to this problem, molecular designs in which a bond exchange activation catalyst is not added have been reported. For example, Non-Patent Document 2 discloses a resin in which a polyester resin having a COOH on a side chain is crosslinked by 4,4'-methylenebis(N,N-diglycidylaniline). The amino group of the aniline having a catalytic activity is included in a network structure, and thus bond exchange is activated at a high temperature without external addition of a bond-exchange catalyst.

RELATED ART DOCUMENTS

NON-PATENT DOCUMENTS

Non-Patent Document 1 : Mikihiro Hayashi, et al., Polymer Chemistry. 2019, 10 (16), 2047-2056.
Non-Patent Document 2 : Mikihiro Hayashi, ACS Applied Polymer Materials, 2020, 2 (12), 5365-5370.

DISCLOSURE OF THE INVENTION

PROBLEMS TO BE SOLVED BY THE INVENTION

However, in cases as in Non-Patent Document 2, the amino group is present at each crosslinking point, so that the degree of restriction of molecular mobility is high around the crosslinking point. Therefore, bond exchange is possible without catalyst addition, but the bond exchange time scale is significantly slow.

Therefore, an object of the present invention is to provide a crosslinked polyester resin that does not lose bond exchange activity even when immersed in water, an organic solvent, or the like and in which bond exchange is fast. Another object of the present invention is to provide a polyester resin in which bond exchange is fast.

SOLUTIONS TO THE PROBLEMS

The configuration according to the present invention that has solved the above problems is as follows.

[1] A crosslinked polyester resin in which a polyester resin having a plurality of side chains each having a carboxy group and a plurality of side chains each having a tertiary amino group is crosslinked by an epoxy-based crosslinking agent having a plurality of epoxy groups.
[2] The crosslinked polyester resin according to [1], wherein the number of carboxy groups of the side chains of the polyester resin in one molecule of the polyester resin is 3 to 80.
[3] The crosslinked polyester resin according to [1] or [2], wherein a ratio of the number of tertiary amino groups of the side chains of the polyester resin to the number of carboxy groups of the side chains of the polyester resin (amino group: carboxy group) is 20:80 to 90:10.
[4] The crosslinked polyester resin according to any one of [1] to [3], wherein the polyester resin is a polycondensate

of a polyvalent carboxylic acid component (A) and a polyhydric alcohol component (B), the polyester resin contains a nucleophilic reactive group-containing polyvalent carboxylic acid component (A3) as the polyvalent carboxylic acid component (A) and contains 50 mol% or more of the nucleophilic reactive group-containing polyvalent carboxylic acid component (A3) in 100 mol% of the polyvalent carboxylic acid component (A), a part of the nucleophilic reactive group-containing polyvalent carboxylic acid component (A3) is Michael-added to an $\alpha,\beta$-unsaturated carboxylic acid (C3C), and a part or entirety of the rest of the nucleophilic reactive group-containing polyvalent carboxylic acid component (A3) is Michael-added to a side chain compound (C3N) having a tertiary amino group.

[5] The crosslinked polyester resin according to [4], wherein the polyhydric alcohol component (B) is at least one selected from aliphatic diols and aromatic polyester diols.

[6] The crosslinked polyester resin according to any one of [1] to [5], wherein the epoxy-based crosslinking agent having a plurality of epoxy groups is an aliphatic diol diglycidyl ether.

[7] The crosslinked polyester resin according to any one of [1] to [6], wherein a peak of temperature change of a loss tangent $\tan\delta$ is in a range of 0 to 100°C.

[8] The crosslinked polyester resin according to any one of [1] to [7], wherein a relaxation time at a temperature of 160°C determined from a stress relaxation curve is 1 to 2000 seconds.

[9] The crosslinked polyester resin according to any one of [1] to [8], wherein an amount of a transesterification catalyst is less than 1 part by mass per 100 parts by mass of the polyester resin, and an amount of an epoxy-based crosslinking agent having a tertiary amino group is less than 30 parts by mole per 100 parts by mole of the epoxy-based crosslinking agent having a plurality of epoxy groups.

[10] A polyester resin having a plurality of side chains each having a carboxy group and a plurality of side chains each having a tertiary amino group.

## EFFECTS OF THE INVENTION

According to the present invention, it is possible to obtain a crosslinked polyester resin that does not lose bond exchange activity even when immersed in water, an organic solvent, or the like and in which bond exchange is fast. According to the present invention, it is also possible to obtain a polyester resin in which bond exchange is fast.

## BRIEF DESCRIPTION OF THE DRAWING

[FIG.1] FIG. 1 is a photograph showing an appearance of a film obtained in Example 1.

[FIG.2] FIG. 2 is a graph showing a temperature dependence of a storage elastic modulus (G') and a loss tangent $\tan\delta$ of the crosslinked products obtained in Example 1, Example 2, or Comparative Example 1.

[FIG.3] FIG. 3 is a graph showing stress-strain curves of the crosslinked products obtained in Example 1, Example 2, and Comparative Example 1.

[FIG.4] FIG. 4 is a graph showing the results of the linear expansion test of the crosslinked products obtained in Examples 1 and 2.

[FIG.5] FIG. 5 is a graph showing a temperature dependence of a stress relaxation curve of the crosslinked product obtained in Example 1.

[FIG.6] FIG. 6 is a graph showing a temperature dependence of a stress relaxation curve of the crosslinked products obtained in Example 1 and Comparative Example 1.

[FIG.7] FIG. 7 is a graph showing a temperature dependence of a stress relaxation curve of the crosslinked products obtained in Examples 1 and 2.

[FIG.8] FIG. 8 is a photograph showing a recyclability of the crosslinked product obtained in Example 1.

[FIG.9] FIG. 9 is a graph showing a temperature dependence of a storage elastic modulus (G') and a loss tangent $\tan\delta$ of the crosslinked products obtained in Examples 3 and 4.

[FIG.10] FIG. 10 is a graph showing the results of the linear expansion test of the crosslinked product obtained in Example 3.

[FIG.11] FIG. 11 is a graph showing the results of the linear expansion test of the crosslinked product obtained in Example 4.

[FIG.12] FIG. 12 is a graph showing a temperature dependence of a stress relaxation curve of the crosslinked product obtained in Example 3.

[FIG.13] FIG. 13 is a graph showing a temperature dependence of a stress relaxation curve of the crosslinked product obtained in Example 4.

## MODE FOR CARRYING OUT THE INVENTION

### 1. Polyester Resin

The crosslinked polyester resin of the present invention has a structure in which a polyester resin having a plurality of side chains each having a carboxy group and a plurality of side chains each having a tertiary amino group (hereinafter, sometimes referred to as pre-crosslinked polyester resin) is crosslinked by an epoxy-based crosslinking agent having a plurality of epoxy groups. The pre-crosslinked polyester resin may be either an aliphatic polyester or an aromatic polyester. From the viewpoint of enhancing adhesiveness, an aliphatic polyester is more preferable. From the viewpoint of enhancing heat resistance, an aromatic polyester is more preferable. An aliphatic polyester and an aromatic polyester may be used in combination. As the tertiary amino group, di-$C_{1-4}$ alkylamino groups such as a dimethylamino group, a methylethylamino group, and a diethylamino group are preferable.

### 2. Normal Polyvalent Carboxylic Acid Component (A1)

The pre-crosslinked polyester resin has a polycondensation structure of a polyvalent carboxylic acid component (A) and a polyhydric alcohol component (B), and a predetermined side chain can be formed by using a side chain-forming polyvalent carboxylic acid component as at least a part of the polyvalent carboxylic acid component.

The polyvalent carboxylic acid component (A) can be divided into a side chain non-forming polyvalent carboxylic acid component (A1) (in the present specification, sometimes referred to as normal polyvalent carboxylic acid component (A1)) and a side chain-forming polyvalent carboxylic acid component.

Examples of the polyvalent carboxylic acid forming the normal polyvalent carboxylic acid component (A1) include dicarboxylic acids and tetracarboxylic acids, and dicarboxylic acids are preferable. Examples of the dicarboxylic acid include: aromatic dicarboxylic acids such as phthalic acid, isophthalic acid, terephthalic acid, phenylene dicarboxylic acid, and 2,6-naphthalene dicarboxylic acid; aliphatic dicarboxylic acids such as succinic acid, glutaric acid, adipic acid, pimelic acid, suberic acid, azelaic acid, sebacic acid, dodecane dicarboxylic acid, and dimeric acid; alicyclic dicarboxylic acids such as 1,4-cyclohexane dicarboxylic acid, tetrahydrophthalic acid, hexahydroisophthalic acid, and 1,2-cyclohexene dicarboxylic acid; unsaturated group-containing dicarboxylic acids such as a terpene-maleic acid adduct; etc. Examples of tetracarboxylic acids include 1,2,4,5-benzene tetracarboxylic acid, 3,3',4,4'-benzophenone tetracarboxylic acid, etc., and acid anhydrides thereof. As the normal polyvalent carboxylic acid component (A1), one or more of these acids can be used.

### 3. Tricarboxylic Acid Component (A2)

Examples of the side chain-forming polyvalent carboxylic acid component include a tricarboxylic acid component (A2), a nucleophilic reactive group (thiol group, or the like)-containing polyvalent carboxylic acid component (A3) (in the present specification, sometimes referred to as nucleophilic polyvalent carboxylic acid component (A3)), an $\alpha,\beta$-unsaturated carbonyl group-containing polyvalent carboxylic acid component (A4) (in the present specification, sometimes referred to as unsaturated polyvalent carboxylic acid component (A4)), etc.

By polycondensation of the tricarboxylic acid component (A2) with the polyhydric alcohol component (B), a carboxy group is formed on the side chain. Examples of the tricarboxylic acid (A2) include: aliphatic tricarboxylic acids such as 1,3,5-pentane tricarboxylic acid; alicyclic tricarboxylic acids such as 1,3,5-cyclohexane tricarboxylic acid; aromatic tricarboxylic acids such as trimellitic acid and trimesic acid; etc. These tricarboxylic acids (A2) may be acid anhydrides. One or more of these tricarboxylic acids (A2) can be used.

### 4. Nucleophilic Polyvalent Carboxylic Acid Component (A3)

By Michael-adding the nucleophilic polyvalent carboxylic acid component (A3) to an $\alpha,\beta$-unsaturated carboxylic acid (C3C), a carboxy group can be introduced to the side chain, and by Michael-adding the nucleophilic polyvalent carboxylic acid component (A3) to a side chain compound (C3N) having an $\alpha,\beta$-unsaturated carbonyl group and a tertiary amino group (in the present specification, sometimes referred to as unsaturated amine), a tertiary amino group can be introduced to the side chain.

Examples of the nucleophilic polyvalent carboxylic acid component (A3) include compounds in which a hydrogen atom of the normal polyvalent carboxylic acid component (A1) is replaced by a nucleophilic group (thiol group, hydroxyl group, or the like), and preferably include aliphatic dicarboxylic acids having a thiol group and having about 4 to 10 carbon atoms such as thiomalic acid. As the nucleophilic polyvalent carboxylic acid component (A3), one or more of these compounds can be used.

Examples of the $\alpha,\beta$-unsaturated carboxylic acid (C3C) for introducing a carboxy group to the side chain include

aliphatic α,β-unsaturated monocarboxylic acids having about 3 to 10 carbon atoms such as acrylic acid, methacrylic acid, crotonic acid, and isocrotonic acid, etc. As the α,β-unsaturated carboxylic acid (C3C), one or more of these acids can be used.

Examples of the unsaturated amine (C3N) for introducing a tertiary amino group to the side chain include: N-[(di-$C_{1-4}$ alkylamino)$C_{1-10}$ alkyl](meth)acrylamides such as N-[3-(dimethylamino)propyl]acrylamide; (di-$C_{1-4}$ alkylamino)$C_{1-10}$ alkyl (meth)acrylates such as 2-(dimethylamino)ethyl acrylate, 2-(diethylamino)ethyl acrylate, 3-(dimethylamino)propyl acrylate, and 3-(diethylamino)propyl acrylate; etc. As the unsaturated amine (C3N), one or more of these amines can be used.

5. Unsaturated Polyvalent Carboxylic Acid Component (A4)

By Michael-adding a side chain compound (C4C) having a nucleophilic group and a carboxy group (in the present specification, sometimes referred to as nucleophilic carboxylic acid) to the unsaturated polyvalent carboxylic acid component (A4), a carboxy group can be introduced to the side chain, and by Michael-adding a side chain compound (C4N) having a nucleophilic group and a tertiary amino group (in the present specification, sometimes referred to as nucleophilic amine) to the unsaturated polyvalent carboxylic acid component (A4), a tertiary amino group can be introduced to the side chain.

Examples of the unsaturated polyvalent carboxylic acid component (A4) include aliphatic α,β-unsaturated dicarboxylic acids having about 4 to 10 carbon atoms such as maleic acid and fumaric acid. As the unsaturated polyvalent carboxylic acid component (A4), one or more of these acids can be used.

Examples of the nucleophilic carboxylic acid (C4C) for introducing a carboxy group into the side chain include aliphatic monocarboxylic acids having a thiol group and having about 2 to 10 carbon atoms such as thioglycolic acid and mercaptopropionic acid. As the nucleophilic carboxylic acid (C4C), one or more of these acids can be used.

Examples of the nucleophilic amine (C4N) for introducing a tertiary amino group to the side chain include $C_{2-10}$ alkanes having a thiol group and a di-$C_{1-4}$ alkylamino group, such as 2-(dimethylamino)ethanethiol. As the nucleophilic amine (C4N), one or more of these amines can be used.

6. Polyhydric Alcohol Component (B)

Examples of the polyhydric alcohol component (B) include: aliphatic glycols such as ethylene glycol, 1,2-propylene glycol, 1,3-propanediol, 2-methyl-1,3-propanediol, 2,2-dimethyl-1,3-propanediol (sometimes referred to as neopentyl glycol), 1,2-butanediol, 1,3-butanediol, 1,4-butanediol, 1,3-pentanediol, 1,4-pentanediol, 1,5-pentanediol, 3-methyl-1,5-pentanediol, 2,4-diethyl-1,5-pentanediol, 1,6-hexanediol, 3-methyl-1,6-hexanediol, 4-methyl-1,7-heptanediol, 2-methyl-1,8-octanediol, 3-methyl-1,8-octanediol, 4-methyl-1,8-octanediol, 4-propyl-1,8-octanediol, and 1,9-nonanediol; alicyclic polyols such as 1,4-cyclohexanediol, 1,2-cyclohexanedimethanol, 1,3-cyclohexanedimethanol, 1,4-cyclohexanedimethanol, tricyclodecane glycols, and hydrogenated bisphenols; monomeric diols such as aromatic diols including bisphenol A, etc. As the monomeric diol, an aliphatic diol is preferable.

The polyhydric alcohol component (B) may be a polyether polyol (polyether glycol) such as polyether glycols including diethylene glycol, triethylene glycol, polyethylene glycol, polyolefin glycol, polytetramethylene glycol, etc.

Also, the polyhydric alcohol component (B) may be a polyester polyol such as glycol-modified products of aromatic dicarboxylic acids including ethylene glycol-modified products of terephthalic acid (e.g., bis-2-hydroxyethyl terephthalate (BHET)), propylene glycol-modified products of terephthalic acid, ethylene glycol-modified products of isophthalic acid, propylene glycol-modified products of isophthalic acid, ethylene glycol-modified products of orthophthalic acid, propylene glycol-modified products of orthophthalic acid, etc., and may be preferably an aromatic polyester diol.

As the polyhydric alcohol component (B), one or more of these compounds can be used.

As the polyhydric alcohol component (B), at least one polyol selected from monomeric polyols (especially aliphatic diols) and polyester polyols (especially aromatic polyester diols) is preferably contained, and an embodiment in which at least a monomeric polyol (especially aliphatic diol) is contained and a polyester polyol (especially aromatic polyester diol) is contained as necessary is more preferable.

7. Side Chains

Each side chain having a carboxy group may be any of the following three.

(1) Carboxylic acid derived from the tricarboxylic acid component (A2) (side chain C1)
(2) Side chain formed by Michael addition of the nucleophilic polyvalent carboxylic acid component (A3) to the unsaturated carboxylic acid (C3C) (side chain C2)
(3) Side chain formed by Michael addition of the nucleophilic carboxylic acid (C4C) to the unsaturated polyvalent

carboxylic acid component (A4) (side chain C3)

The side chain having a carboxy group is preferably the side chain C2. The amount of the side chain C2 per 100 moles of the total of the side chain C1, the side chain C2, and the side chain C3 is, for example, 50 moles or more, preferably 70 moles or more, and more preferably 90 moles or more, and may be 100 moles.

Each side chain having a tertiary amino group may be any of the following two.

(1) Side chain formed by Michael addition of the nucleophilic polyvalent carboxylic acid component (A3) to the unsaturated amine (C3N) (side chain N1)

(2) Side chain formed by Michael addition of the nucleophilic amine (C4N) to the unsaturated polyvalent carboxylic acid component (A4) (side chain N2)

The side chain having a tertiary amino group is preferably the side chain N1. The amount of the side chain N1 per 100 moles of the total of the side chain N1 and the side chain N2 is, for example, 50 moles or more, preferably 70 moles or more, and more preferably 90 moles or more, and may be 100 moles.

Preferably, the pre-crosslinked polyester resin contains the nucleophilic polyvalent carboxylic acid component (A3) as the polyvalent carboxylic acid component (A), a part of the nucleophilic polyvalent carboxylic acid component (A3) is Michael-added to the unsaturated carboxylic acid (C3C), and a part or entirety (preferably entirety) of the rest of the nucleophilic polyvalent carboxylic acid component (A3) is added to the unsaturated amine (C3N).

The amount of the nucleophilic polyvalent carboxylic acid component (A3) per 100 mol% of the entire polyvalent carboxylic acid component (A) is, for example, 50 mol% or more, preferably 70 mol% or more, and more preferably 90 mol% or more, and may be 100 mol%.

The number of carboxy groups of the side chains in one molecule of the pre-crosslinked polyester resin is, for example, about 3 to 80, preferably about 10 to 60, and more preferably about 20 to 50. As the number of carboxy groups increases, the number of crosslinking points increases, so that heat resistance is improved. Also, by not having an excessively large number of carboxy groups, toughness or elasticity becomes good.

The number of tertiary amino groups of the side chains in one molecule of the pre-crosslinked polyester resin is, for example, about 5 to 100, preferably about 20 to 85, and more preferably about 30 to 70.

The ratio (amino group: carboxy group) of the tertiary amino groups of the side chains to the carboxy groups of the side chains is, for example, 20:80 to 90:10, preferably 25:75 to 70:30, and more preferably 30:70 to 50:50. By making the ratio of the tertiary amino groups appropriate, bond exchange at crosslinking points can be faster.

The acid value of the pre-crosslinked polyester resin is, for example, 5 to 250 mg KOH/g, preferably 30 to 200 mg KOH/g, and more preferably 50 to 150 mg KOH/g. As the acid value increases, the number of crosslinking points increases, so that heat resistance is improved. Also, by not having an excessively high acid value, toughness or elasticity becomes good.

The pre-crosslinked polyester resin has a number-average molecular weight (Mn) of, for example, 4000 to 90000. When the number-average molecular weight of the pre-crosslinked polyester resin is not lower than 4000, heat resistance can be improved. The number-average molecular weight is more preferably not lower than 4200 and further preferably not lower than 10000. However, when the number-average molecular weight of the pre-crosslinked polyester resin having a carboxy group on a side chain is excessively high, the pre-crosslinked polyester resin becomes excessively hard, resulting in becoming brittle. Therefore, the number-average molecular weight is preferably not higher than 90000, more preferably not higher than 60000, and further preferably not higher than 40000.

The polyester resin having a carboxy group on a side chain preferably has a poly dispersity index (PDI) of 1.3 to 1.8. The poly dispersity index can be calculated using the following equation based on a weight-average molecular weight (Mw) and the number-average molecular weight (Mn).

$$\text{PDI value} = Mw/Mn$$

8. Epoxy-Based Crosslinking Agent

The epoxy-based crosslinking agent binds to the carboxy groups of the side chains of the pre-crosslinked polyester resin to crosslink the polyester resin. The epoxy-based crosslinking agent is not particularly limited as long as the epoxy-based crosslinking agent has two or more epoxy groups in the molecule, and examples of the epoxy-based crosslinking agent include diol diglycidyl ethers, glycidyl ethers of alcohols having three or more hydroxyl groups, epoxy resins, epoxy amine compounds having two or more epoxy groups and two or more tertiary amino groups in the molecule, compounds including two or more epoxy groups and one tertiary amino group in the molecule, etc. As the epoxy-based crosslinking agent, one or more of these agents can be used.

Examples of diol diglycidyl ethers include compounds in which a glycidyl group is ether-linked to the hydroxyl group of the diol exemplified as the polyhydric alcohol component (B). Aliphatic diol diglycidyl ethers such as ethylene glycol diglycidyl ether, diethylene glycol diglycidyl ether, polyethylene glycol diglycidyl ether, propylene glycol diglycidyl ether, dipropylene glycol diglycidyl ether, tripropylene glycol diglycidyl ether, polypropylene glycol diglycidyl ether, 1,4-butanediol diglycidyl ether, 1 ,5-pentanediol diglycidyl ether, neopentyl glycol diglycidyl ether, 1,6-hexanediol diglycidyl ether, and hydrogenated bisphenol A diglycidyl ether, and aromatic diol diglycidyl ethers such as bisphenol A diglycidyl ether, etc., are preferable. Aliphatic diol diglycidyl ethers are more preferable. As a compound in which a diglycidyl group is ether-linked to the hydroxyl group of the polyhydric alcohol, one or more of these compounds can be used.

Examples of glycidyl ethers of alcohols having three or more hydroxyl groups include diglycidyl ethers of aliphatic polyols such as glycerin diglycidyl ether and trimethylol propane diglycidyl ether. One or more of these glycidyl ethers of alcohols having three or more hydroxyl groups can be used.

Examples of epoxy resins include cresol novolac-type epoxy resins, phenolic novolac-type epoxy resins, epoxy resins having a dicyclopentadiene skeleton, etc. One or more of these epoxy resins can be used. As a commercially available product of cresol novolac-type epoxy resins, for example, YDCN-700 manufactured by DIC Corporation, etc., can be used. As a commercially available product of phenolic novolac-type epoxy resins, for example, EPICLON N-700A manufactured by DIC Corporation, etc., can be used. As a commercially available product of epoxy resins having a dicyclopentadiene skeleton, HP7200 series manufactured by DIC Corporation can be used.

Examples of epoxy amine compounds having two or more epoxy groups and two or more tertiary amino groups in the molecule include compounds having two diglycidylamino groups and a benzene ring such as N,N,N',N'-tetraglycidyl-m-xylenediamine and 4,4'-methylenebis(N,N-diglycidylaniline). N,N,N',N'-tetraglycidyl-m-xylenediamine is commercially available from MITSUBISHI GAS CHEMICAL COMPANY, INC., as a multifunctional epoxy compound "TETRAD-X". 4,4'-methylenebis(N,N-diglycidylaniline) is available from Tokyo Chemical Industry Co., Ltd. (TCI).

Examples of compounds including two or more epoxy groups and one tertiary amino group in the molecule include compounds having one diglycidylamino group, a glycidyloxy group, and a benzene ring, such as triglycidyl para-aminophenol (also called N,N-diglycidyl-4-(glycidyloxy)aniline). As a commercially available product of triglycidyl para-aminophenol, for example, jER630 manufactured by Mitsubishi Chemical Corporation, etc., can be used.

As the epoxy-based crosslinking agent having a plurality of epoxy groups, an epoxy-based crosslinking agent not having a tertiary amino group (diol diglycidyl ethers, glycidyl ethers of alcohols having three or more hydroxyl groups, epoxy resins, etc.) is preferable, and a diol diglycidyl ether (especially aliphatic diol diglycidyl ether) is more preferable.

The amount of the epoxy-based crosslinking agent having a plurality of epoxy groups per 100 parts by mass of the pre-crosslinked polyester resin is, for example, 1 to 50 parts by mass, preferably 5 to 40 parts by mass, and more preferably 10 to 30 parts by mass.

When the amount of the entire epoxy-based crosslinking agent having a plurality of epoxy groups is 100 parts by mole, the amount of the epoxy-based crosslinking agent not having a tertiary amino group (especially a compound in which a diglycidyl group is ether-linked to the hydroxyl group of the polyhydric alcohol) is preferably 30 parts by mole or more, more preferably 50 parts by mole or more, and further preferably 80 parts by mole or more, and may be 100 parts by mole. On the other hand, when the amount of the entire epoxy-based crosslinking agent having a plurality of epoxy groups is 100 parts by mole, the amount of an epoxy-based crosslinking agent having a tertiary amino group in the molecule is preferably less than 30 parts by mole.

## 9. Transesterification Catalyst

The crosslinked polyester resin of the present invention may not necessarily contain a transesterification catalyst, but may contain a transesterification catalyst as long as the advantageous effects of the present invention are not impaired. In the present specification, not containing a transesterification catalyst means that the amount of the transesterification catalyst per 100 parts by mass of the polyester resin is less than 1 part by mass.

Examples of the transesterification catalyst include: metal-containing catalysts such as titanium compounds (tetra-n-butyl titanate, tetraisopropyl titanate, titanium oxyacetylacetonate, etc.), antimony compounds (tributoxy anthimony, antimony trioxide, etc.), germanium compounds (tetra-n-butoxy germanium, germanium oxide, etc.), scandium compounds (scandium triflate, etc.), zinc compounds (zinc acetate, zinc octylate, etc.), and aluminum compounds (aluminum acetate, aluminum acetylacetate, etc.); amines such as trimethylamine, triethylamine, and benzyldimethylamine; quaternary ammonium salts such as tetramethyl ammonium chloride and triethyl benzyl ammonium chloride; imidazoles such as 2-ethyl 4-imidazole; amides; pyridines such as 4-dimethylaminopyridine; phosphines such as triphenylphosphine; phosphonium salts such as tetraphenylphosphonium bromide; etc. Metal-containing catalysts such as scandium compounds and zinc compounds are preferable. One of these transesterification catalysts may be used, or two or more of these transesterification catalysts may be used.

In the case where the transesterification catalyst is blended, the amount of the transesterification catalyst per 100 parts by mass of the crosslinked polyester resin is, for example, 1 to 30 parts by mass, preferably 3 to 20 parts by

mass, and more preferably 5 to 10 parts by mass.

10. Crosslinked Polyester Resin

The crosslinked polyester resin has a peak of temperature change of a loss tangent tanδ (α relaxation peak), for example, in a range of 0 to 100°C, preferably 10 to 70°C, and more preferably 20 to 50°C. The higher the α relaxation peak temperature is, the higher the heat resistance is. The peak of temperature change of the loss tangent tanδ is a value measured with a measurement frequency of 1 Hz and a strain of 0.1%.

A Young's modulus (measurement temperature: room temperature, e.g., 25°C) of the crosslinked polyester resin is, for example, 0.1 MPa to 5000 MPa, preferably 0.5 MPa to 2500 MPa, and more preferably 2 MPa to 1000 MPa.

In a graph showing temperature change of elongation, the crosslinked polyester resin loses linearity in a temperature range higher than the glass transition temperature thereof. That is, the crosslinked polyester resin has the nature that bond exchange at crosslinking points thereof is activated. Accordingly, the crosslinked polyester resin has high strength at room temperature, and enables reprocessing and adhesion between films at an ester bond exchange activation temperature thereof or higher. Furthermore, the remoldability of the crosslinked polyester resin enables molding and thinning after a crosslinking reaction, and scratches can be repaired due to self-repair properties, so that the crosslinked polyester resin can be used semi-permanently. The ester bond exchange activation temperature of the crosslinked polyester resin can be obtained as a softening temperature on the basis of the inflection point of linear expansion coefficient change.

A relaxation time at a temperature of 160°C obtained from a stress relaxation curve of the crosslinked polyester resin is, for example, 1 to 2000 seconds, preferably 50 to 1500 seconds, and more preferably 100 to 1000 seconds. Although the crosslinked polyester resin exhibits a high Young's modulus and has high elastic strength, since the relaxation time is fast, the crosslinked polyester resin has excellent thermal deformability at a predetermined temperature or higher. In the present specification, a stress relaxation test is performed for the relaxation time, and the relaxation time is defined as the time at which the elastic modulus becomes 1/e (= 0.37) times the initial elastic modulus.

The crosslinked polyester resin has self-adhesiveness, and by stacking crosslinked polyester resins on each other and heating and pressurizing the crosslinked polyester resins, transesterification occurs at the interface between the crosslinked polyester resins, so that the crosslinked polyester resins can be adhered to each other even without using an adhesive. Since the crosslinked polyester resin has self-adhesiveness, the crosslinked polyester resin can be used as a main component of a self-adhesive.

The crosslinked polyester resin has remoldability, and after the crosslinked polyester resin is deformed into a predetermined shape, by heating the crosslinked polyester resin in the deformed state, transesterification occurs, so that the crosslinked polyester resin is remolded, and the predetermined shape is maintained even when the crosslinked polyester resin is cooled.

The crosslinked polyester resin has scratch repair properties, and even when the surface of the crosslinked polyester resin is damaged by a cutter knife or the like, bond exchange by a transesterification reaction occurs by heating the crosslinked polyester resin, so that the crosslinked polyester resin self-repairs. Since the crosslinked polyester resin has scratch repair properties, the crosslinked polyester resin can be used as a main component of a self-repair material.

The crosslinked polyester resin can be used, for example, as an adhesive sheet or a main component of a molding material (or as a molding material).

In the case where the crosslinked polyester resin is used as an adhesive sheet, the crosslinked polyester resin may be placed between to-be-adhered members that are desired to be adhered, and may be heated. By the heating, bond exchange by a transesterification reaction occurs, so that the to-be-adhered members can be adhered to each other. Examples of the to-be-adhered members include resin films, metal foils, etc., and for example, resin films, metal foils, a resin film and a metal foil, etc., can be adhered to each other. Examples of the resin films include polyimide films, polyester films, PET films, etc. Examples of the metal foils include copper foil, silver foil, gold foil, etc.

Bond exchange is enabled by heating the crosslinked polyester resin to the ester bond exchange activation temperature or higher. Thus, when the crosslinked polyester resin is used as a material for an adhesive, the adhesive is easily peeled by heating the adhesive to the ester bond exchange activation temperature or higher. Therefore, the crosslinked polyester resin can be used as an adhesive for paste-and-remove type repair applications.

The crosslinked polyester resin can be used as a laminate material. Since the crosslinked polyester resin has heat resistance, for example, a film using the crosslinked polyester resin is attached and adhered to the surface of a resin molded article or a metal molded article to laminate the resin molded article or the metal molded article, whereby the heat resistance of the resin molded article or the metal molded article can be improved.

The crosslinked polyester resin has good molding processability and extrudability, and thus is useful as a molding material and can be used, for example, as a material for 3D printers or a material for thread-like molded articles.

The crosslinked polyester resin can be used as a material for reticular structures. A reticular structure is a structure in which portions of thread-like molded articles are connected to each other. A reticular structure can be

produced by melting the crosslinked polyester resin, discharging the melted matter through a nozzle, and solidifying the discharged matter while welding the discharged matter.

11. Method for Producing Crosslinked Polyester Resin

The crosslinked polyester resin can be produced by known methods. An example of such a method is a method in which the above pre-crosslinked polyester resin and the above epoxy-based crosslinking agent having a plurality of epoxy groups are dissolved in a solvent, then the solvent is removed, and heating is performed under reduced pressure to perform crosslinking.

Examples of the solvent include: aromatic hydrocarbons such as toluene; ketones such as methyl ethyl ketone and cyclohexanone; nitrogen-containing solvents such as dimethylacetamide, dimethylformamide, and N-methyl pyrrolidone; ethers such as tetrahydrofuran, 1,4-dioxane, 1,3-dioxane, and 1,3-dioxolane; etc. Among them, nitrogen-containing solvents such as dimethylformamide are preferable.

The pre-crosslinked polyester resin can be produced by performing polycondensation of the polyvalent carboxylic acid component (A) and the polyhydric alcohol component (B) by a known method, and then causing a reaction of the side chain compound. A solvent may be used for the polycondensation and the reaction with the side chain compound. For the polycondensation reaction, a solvent may not necessarily be used. Furthermore, known catalysts such as the above-described transesterification catalyst may be used in the polycondensation.

The present application claims priority based on Japanese Patent Application No. 2021-079856 filed on May 10, 2021. All the contents described in Japanese Patent Application No. 2021-079856 are incorporated herein by reference.

EXAMPLES

Hereinafter, the present invention will be more specifically described by means of examples. However, the present invention is not limited by the following examples and can also be carried out with modifications being made within the scope of the gist described above and below, and each of these modifications are included in the technical scope of the present invention.

Production Example 1

Melt polycondensation was carried out in the presence of 0.42 g (0.86 mmol) of scandium triflate (80°C, 14 hours) using 9.00 g (86.4 mmol) of 1,5-pentanediol and 12.87 g (85.7 mmol) of thiomalic acid, to obtain a thiol group side chain-containing polyester (PE-SH1).

[Formula 1]

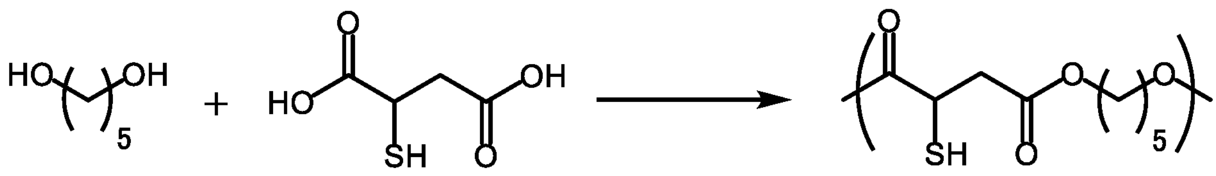

PE-SH1

Production Example 2

3.00 g of PE-SH1 was dissolved in 30 ml of dimethylformamide (DMF). To the obtained DMF solution, 5.37 g of N-[3-(dimethylamino)propyl]acrylamide (DAPAM) and 0.47 g of acrylic acid (AA) were added, and the solution was stirred at room temperature for 24 hours, thereby Michael-adding the thiol group of PE-SH1 to DAPAM and AA. Per 1 mole of the thiol group of PE-SH1, the amount of DAPAM was 2.5 moles, and the amount of AA was 1 mole. The reaction solution was concentrated in a rotary evaporator and then added dropwise to a large excess of tetrahydrofuran with stirring, and the resulting precipitate was taken by filtration (re-precipitation purification). The re-precipitation purification was repeated twice with DMF as a dissolving solvent (good solvent) and tetrahydrofuran as a precipitating solvent (poor solvent), and vacuum drying was performed to obtain a target product (PE-COOH-Amine-1). The number-average molecular weight (Mn) of PE-COOH-Amine-1 was 30533 g/mol, the number of carboxy groups in one molecule was 46, and the number of tertiary amino groups in one molecule was 46 (carboxy group : tertiary amino group = 50:50, acid

value: 86 mg KOH/g).

[Formula 2]

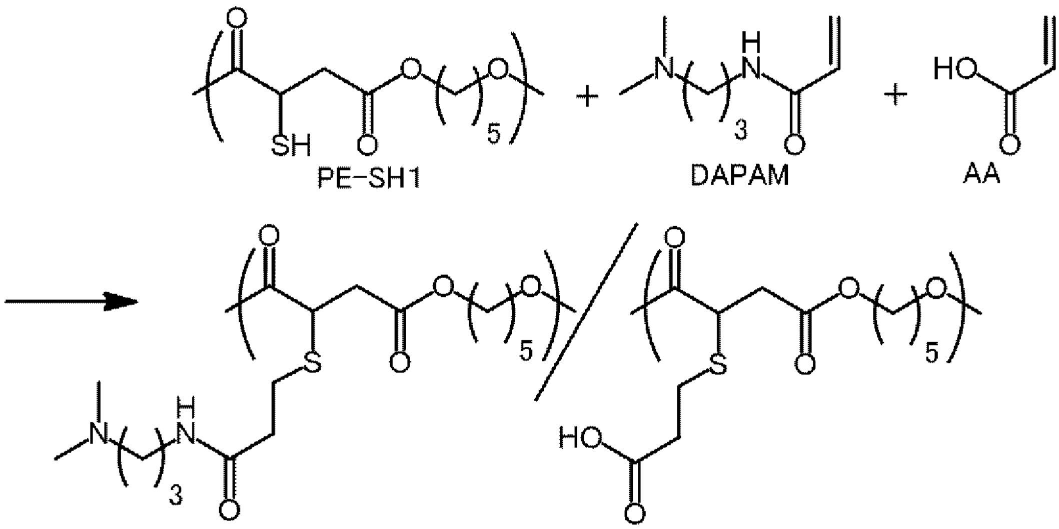

PE-COOH-Amine-1

The number-average molecular weight (Mn), the number of carboxy groups in one molecule, the number of tertiary amino groups in one molecule, and the acid value were obtained as follows (unless otherwise noted, the same measurement methods were used in EXAMPLES).

(Number-Average Molecular Weight (Mn))

The pre-crosslinked polyester resin was dissolved in DMF such that the concentration thereof was about 0.5% by mass, and was filtered through a polytetrafluoroethylene membrane filter having a pore diameter of 0.5 μm to obtain a filtrate as a sample. The number-average molecular weight (Mn) was measured by gel permeation chromatography using DMF containing LiBr (0.05% bay mass) as a mobile phase and a differential refractometer as a detector. The flow rate was set to 0.5 mL/min, and the column temperature was set to 40°C. The columns used were KF-803, KF-804L, and KF-805L manufactured by Showa Denko K.K. Monodisperse polymethyl methacrylate was used as a standard substance (molecular weight standard). Low molecular weight compounds (oligomers, etc.) having a number-average molecular weight less than 1000 were not counted and were omitted.

(Number of Carboxy Groups and Number of Tertiary Amino Groups in One Molecule)

The number of carboxy groups and the number of tertiary amino groups (in this example, the number of dimethylamino groups) in one molecule were obtained by proton nuclear magnetic resonance (1H NMR). Bruker Analytik DPX400 spectrometer (400 MHz) was used as the measurement device, deuterated DMSO was used as the measurement solvent, and the measurement temperature was set to 25°C.

(Acid value)

The acid value was calculated on the basis of the obtained number of carboxy groups in one molecule and the obtained number-average molecular weight (Mn). When the acid value is denoted by X (mg KOH/g), the acid value X can be obtained by the following equation.

$$X/56.10 = (1/Mn) \times \text{number of carboxy groups in one molecule} \times 1000$$

Example 1

PE-COOH-Amine-1 (1.0 g) and 1,4-butanediol diglycidyl ether (BDE) (0.16 g) were separately dissolved in dimethylformamide (DMF), and the solutions thereof were mixed in a polytetrafluoroethylene vessel. BDE was added

in an amount that gave equimolar amounts of carboxy group and epoxy group. The DMF solution was left on a heater at 60°C for about 40 hours to volatilize the solvent. By performing vacuum drying at 60°C for 7 hours, the solution was dried such that the solvent was completely volatilized. The obtained dried sample was heated under vacuum at 120°C for 14 hours to obtain a thermally crosslinked product.

[Formula 3]

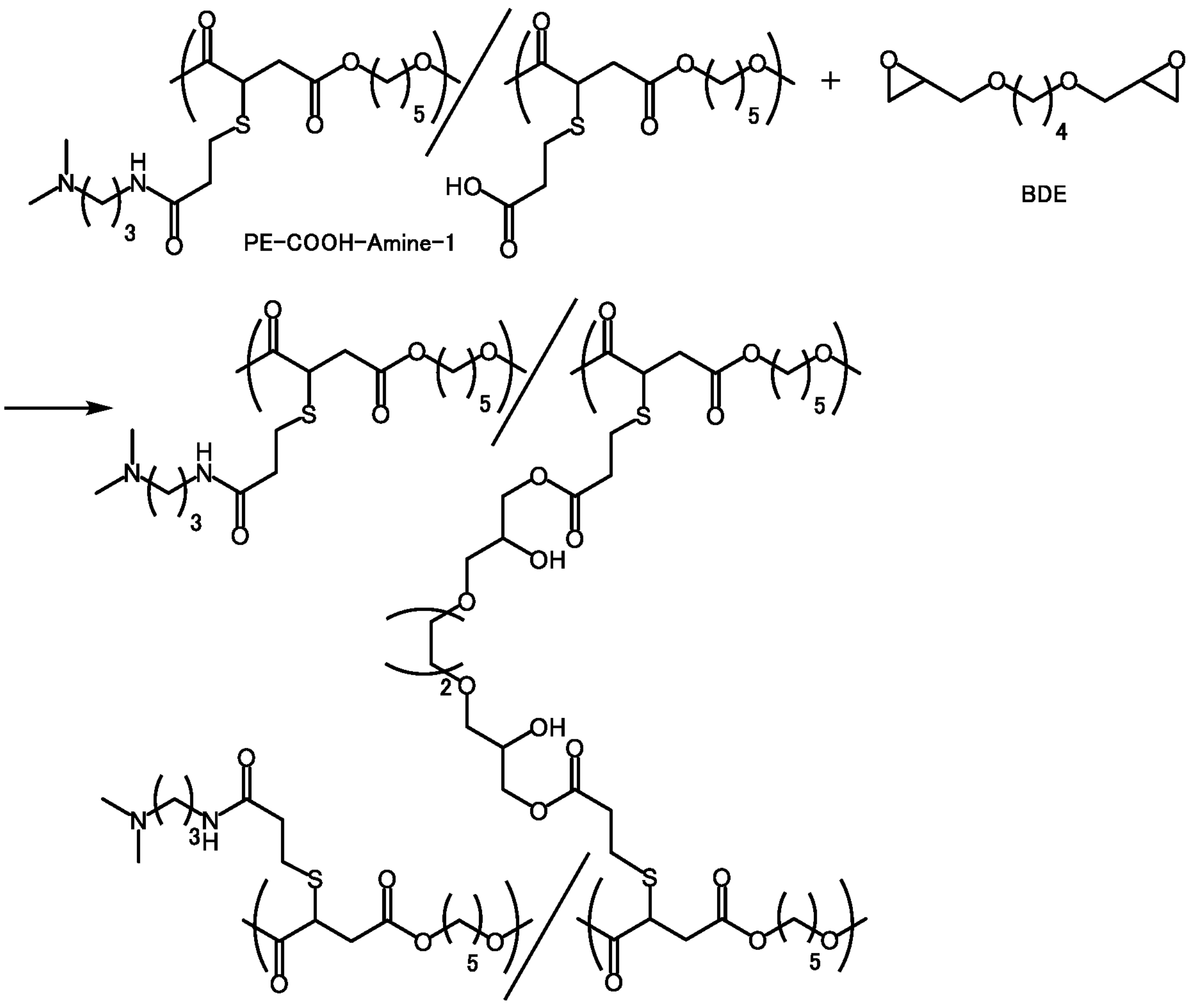
PE-COOH-Amine-1
BDE

The dried sample, which had adhesive properties, became an elastomer film having high self-supporting properties as a result of the heating for 14 hours. To confirm the progress of the crosslinking reaction, a swelling test was performed using DMF. 0.049 g of the crosslinked sample was immersed in DMF. After 24 hours, the extracted sol solution was transferred to another sample bottle. The remaining gel component was immersed in DMF again, and the same operation was performed a total of three times. When the initial weight and the remaining weight of the gel component were compared, the gel component of the sample heated for 14 hours was about 85%. From this result, it was confirmed that the crosslinking reaction had sufficiently proceeded.

For each of the samples of the mixture of PE-COOH-Amine-1 and BDE before and after thermal crosslinking, a heat flow rate was measured in the range of -50°C to 200°C at a temperature change rate of 10°C/min in an $N_2$ gas atmosphere using DSC 7020 (manufactured by Hitachi High-Tech Corporation) to determine a glass transition temperature (Tg). The Tg of sample before thermal crosslinking was 6.7°C, and the Tg of the sample after thermal crosslinking was 18.3°C. This temperature increase is attributed to the formation of a crosslinked structure.

Example 2

A target product (PE-COOH-Amine-2) was obtained by adding the thiol group of PE-SH1 to acrylic acid (AA) and N-[3-(dimethylamino)propyl]acrylamide (DAPAM) in the same manner as Production Example 2, except that the use amounts of AA and DAPAM were changed. The number-average molecular weight (Mn) of PE-COOH-Amine-2 was

28800 g/mol, the number of carboxy groups in one molecule was 27, and the number of tertiary amino groups in one molecule was 64 (carboxy group: tertiary amino group = 30:70, acid value: 52.6 mg KOH/g). A thermally crosslinked product was obtained in the same manner as Example 1, except that the obtained PE-COOH-Amine-2 was used. When a DMF swelling test of the thermally crosslinked product of Example 2 was performed in the same manner as Example 1, the gel component was about 85%, so that it was confirmed that the crosslinking reaction had sufficiently proceeded.

Comparative Example 1

A polyester (PE-COOH-1) having a carboxy group on a side chain was produced in the same manner as Production Example 2, except that DAPAM was not used. The number-average molecular weight (Mn) of PE-COOH-1 was 20100 g/mol, the number of carboxy groups in one molecule was 25, and the acid value was 70 mg KOH/g. A thermally crosslinked product was obtained in the same manner as Example 1, except that 4,4'-methylenebis(N,N-diglycidylaniline) was used as the crosslinking agent, and the solvent was THF.

[Formula 4]

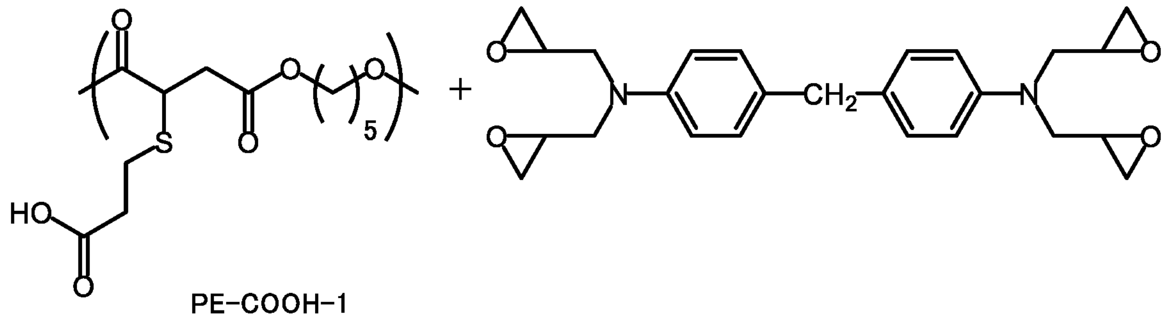

PE-COOH-1

For the crosslinked products obtained in Example 1, Example 2, and Comparative Example 1, (1) moldability was evaluated, (2) temperature-dispersion viscoelasticity was measured, (3) a tensile test was performed, (4) a linear expansion coefficient was measured, (5) a stress relaxation test was performed, and (6) recyclability was evaluated.

(1) Moldability

The crosslinked products of Example 1 and Example 2 were able to be molded into a film shape when pressed by a heat press at a temperature of 150°C for 1 hour. The appearance of the molded body of the crosslinked product of Example 1 is shown in FIG. 1.

(2) Temperature-Dispersion Viscoelasticity

Temperature-dispersion viscoelasticity was measured in a temperature decrease mode in the temperature range from 190°C to -50°C using MCR302 (manufactured by Anton Paar Gmbh). The measurement was performed at a temperature change rate of 5°C/min in an $N_2$ gas atmosphere. The measurement frequency was 1 Hz and the strain was 0.1%. The measurement sample used had a disk shape with a diameter of 8 mm and a thickness of 0.5 mm.

FIG. 2 shows the temperature dependence of a storage elastic modulus (G') and a loss tangent tan$\delta$ of the crosslinked product obtained in Example 1, Example 2, or Comparative Example 1. In FIG. 2, each solid line shows the temperature dependence of the storage elastic modulus (G'), and each dashed line shows the temperature dependence of the loss tangent tan$\delta$. In Example 1 and Example 2, a tan$\delta$ peak ($\alpha$ relaxation peak) derived from segmental relaxation is seen in a region at about 30°C. On the lower temperature side of this peak region, the sample is in a glass state, and on the higher temperature side of this peak region, the sample is in a rubber state. The rubbery flat region is stable within the measurement temperature range, so that it is found that the crosslink density has not changed. On the other hand, in Comparative Example 1, an $\alpha$ relaxation peak is seen at about -30°C. As a result, Example 1 and Example 2 have a higher elastic modulus around room temperature as compared to Comparative Example 1. The values of the rubbery flat modulus are also higher in Example 1 and Example 2 than in Comparative Example 1. From these, it can be said that Example 1 and Example 2 have higher material strength around room temperature and in the high temperature range than Comparative Example 1.

(3) Tensile Test

Measurement conditions: A tensile test was performed at room temperature using AGS-500NX (manufactured by SHIMADZU CORPORATION). The tensile test speed was 10 mm/min. The sample used was a dumbbell test piece with a thickness of 0.3 mm, a gauge width of 4 mm, and a gauge length of 13 mm.

FIG. 3 shows stress-strain curves of the crosslinked products of Example 1, Example 2, and Comparative Example 1. The Young's modulus of Example 1 was 3.0 MPa, the Young's modulus of Example 2 was 4.4 MPa, and the Young's modulus of Comparative Example 1 was 0.5 MPa. The Young's moduli of Example 1 and Example 2 are significantly higher than that of Comparative Example 1. This agrees with the above results of the temperature-dispersion viscoelasticity measurement.

(4) Linear Expansion Coefficient

A linear expansion coefficient was measured in the range from room temperature to 240°C using TMA7100 (manufactured by Hitachi High-Tech Corporation). The measurement was performed at a temperature change rate of 10°C/min in an $N_2$ gas atmosphere. The sample used was a strip sample with a width of 4 mm, a thickness of 0.5 mm, and a length of 20 mm.

FIG. 4 shows the results of the linear expansion coefficient test measurement for Example 1. The vertical axis indicates a sample length (L) normalized by a sample length at 100°C ($L_{100°C}$). On the higher temperature side of about 150°C, a deviation from linear extrapolation assuming constant elongation is observed, so that it is found that the sample is softened. From the results of DSC measurement, it has been found that this softening is not due to glass transition, and in thermogravimetric loss measurement, it has been found that the pyrolysis temperature (5% weight loss) is 210°C. That is, this softening is due to activation of bond exchange, suggesting that crosslinking bonds are exchanged moment by moment at about 150°C or higher. Similarly, in Example 2 as well, the sample was softened at about 150°C. From these, it is found that bond exchange is activated even without catalyst addition.

(5) Stress Relaxation Test

A stress relaxation test was performed at a temperature of 100°C, 150°C, 160°C, 170°C, or 180°C using MCR302 (manufactured by Anton Paar Gmbh). The test was performed in an $N_2$ gas atmosphere. The sample used was a disk-shaped sample with a diameter of 8 mm and a thickness of 0.5 mm.

FIG. 5 shows the results of the stress relaxation measurement for the crosslinked product of Example 1. The vertical axis indicates stress ($\sigma$) normalized by the initial stress ($\sigma_0$), and the horizontal axis indicates elapsed time. It is found that at 150°C to 180°C, significant stress relaxation is observed, and the relaxation rate increases with increasing temperature. This is due to the fact that bond exchange rate is increased with increasing temperature.

On the other hand, in the stress relaxation curve at 100°C for the crosslinked product of Example 1 shown in FIG. 5, stress relaxation has not proceeded. The linear expansion coefficient test suggests that bond exchange is activated at a temperature of about 150°C or higher, so that it is found that bond exchange is suspended at 100°C.

FIG. 6 shows a comparison of stress relaxation measurement data between Example 1 and Comparative Example 1. The compared measurement temperatures are 160°C, 170°C, and 180°C. When a relaxation time was defined as the time at which the elastic modulus becomes 1/e (= 0.37) times the initial elastic modulus, the relaxation time at 180°C of Example 1 was about 60 seconds, and the relaxation time at 180°C of Comparative Example 1 was about 3400 seconds. That is, in the bond exchange resin (Example 1) having a tertiary amino group introduced to the side chain, an increase in bond exchange rate that is about 50 times that in the case where a tertiary amino group was introduced to crosslinking points (Comparative Example 1) was achieved. Comparisons at the other temperatures are summarized in Table 1.

FIG. 7 shows a comparison of stress relaxation measurement data between Example 1 and Example 2. The compared measurement temperatures are 180°C. As in Example 1, significant stress relaxation is also observed for the crosslinked product of Example 2, so that it is confirmed that bond exchange has proceeded. The relaxation rate of the crosslinked product of Example 2 is substantially equal to that of Example 1, so that the exchange rate is significantly higher than that of Comparative Example 1. Table 1 summarizes the relaxation time at each temperature for the crosslinked product of Example 2. From these, it is found that bond exchange proceeds sufficiently fast even without catalyst addition.

[Table 1]

| Table 1 : Relaxation time at each temperature | | | |
|---|---|---|---|
| | Example 1 | Example 2 | Comparative Example 1 |
| 160°C | 380 sec | 430 sec | 9200 sec |
| 170°C | 144 sec | 180 sec | 5600 sec |
| 180°C | 60 sec | 76 sec | 3460 sec |

(6) Recyclability

The crosslinked product of Example 1 was shredded using a cutter. The shredded samples were packed in a disk-shaped Teflon (registered trademark) mold and hot-pressed (150°C, 1h). By the hot-pressing, a disk-shaped sample in which the shredded samples were fused was obtained (FIG. 8). This result suggests that bond exchange between the surfaces of the shredded samples and molecular penetration into paired surfaces sufficiently proceeded. On the other hand, in Comparative Example 1 in which bond exchange was slow, no fused samples were obtained under the same conditions. Thus, it is found that a sample having faster progress of bond exchange is more advantageous in exhibition of recyclability.

Production Example 3

Melt polycondensation was carried out in the presence of 0.49 g (1.0 mmol) of scandium triflate (100°C, 8 hours) using 25.42 g (100.0 mmol) of bis-2-hydroxyethyl terephthalate, 10.42 g (100.0 mmol) of 1,5-pentanediol, and 30.03 g (200.0 mmol) of thiomalic acid, to obtain a thiol group side chain-containing polyester (PE-SH2).

[Formula 5]

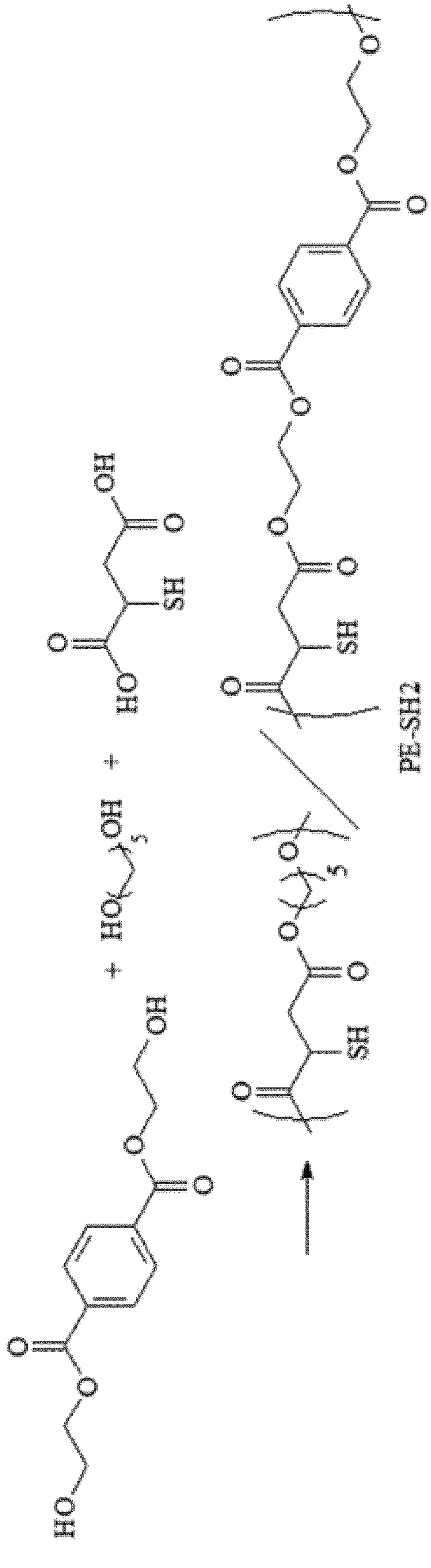
PE-SH2

Production Example 4

3.00 g of PE-SH2 was dissolved in 30 ml of dimethylformamide (DMF). To the obtained DMF solution, 3.05 g of N-[3-(dimethylamino)propyl]acrylamide (DAPAM) and 0.28 g of acrylic acid (AA) were added, and the solution was stirred at room temperature for 24 hours, thereby Michael-adding the thiol group of PE-SH2 to DAPAM and AA. Per 1 mole of the thiol group of PE-SH2, the amount of DAPAM was 2.5 moles, and the amount of AA was 0.5 moles. The reaction solution was concentrated in a rotary evaporator and then added dropwise to a large excess of tetrahydrofuran with stirring, and the resulting precipitate was taken by filtration (re-precipitation purification). The re-precipitation purification was repeated twice with DMF as a dissolving solvent (good solvent) and tetrahydrofuran as a precipitating solvent (poor solvent), and vacuum drying was performed to obtain a target product (PE-COOH-Amine-3). The number-average molecular weight (Mn) of PE-COOH-Amine-3 was 4324 g/mol, carboxy group : tertiary amino group was 30:70, and the acid value was 75 mg KOH/g.

[Formula 6]

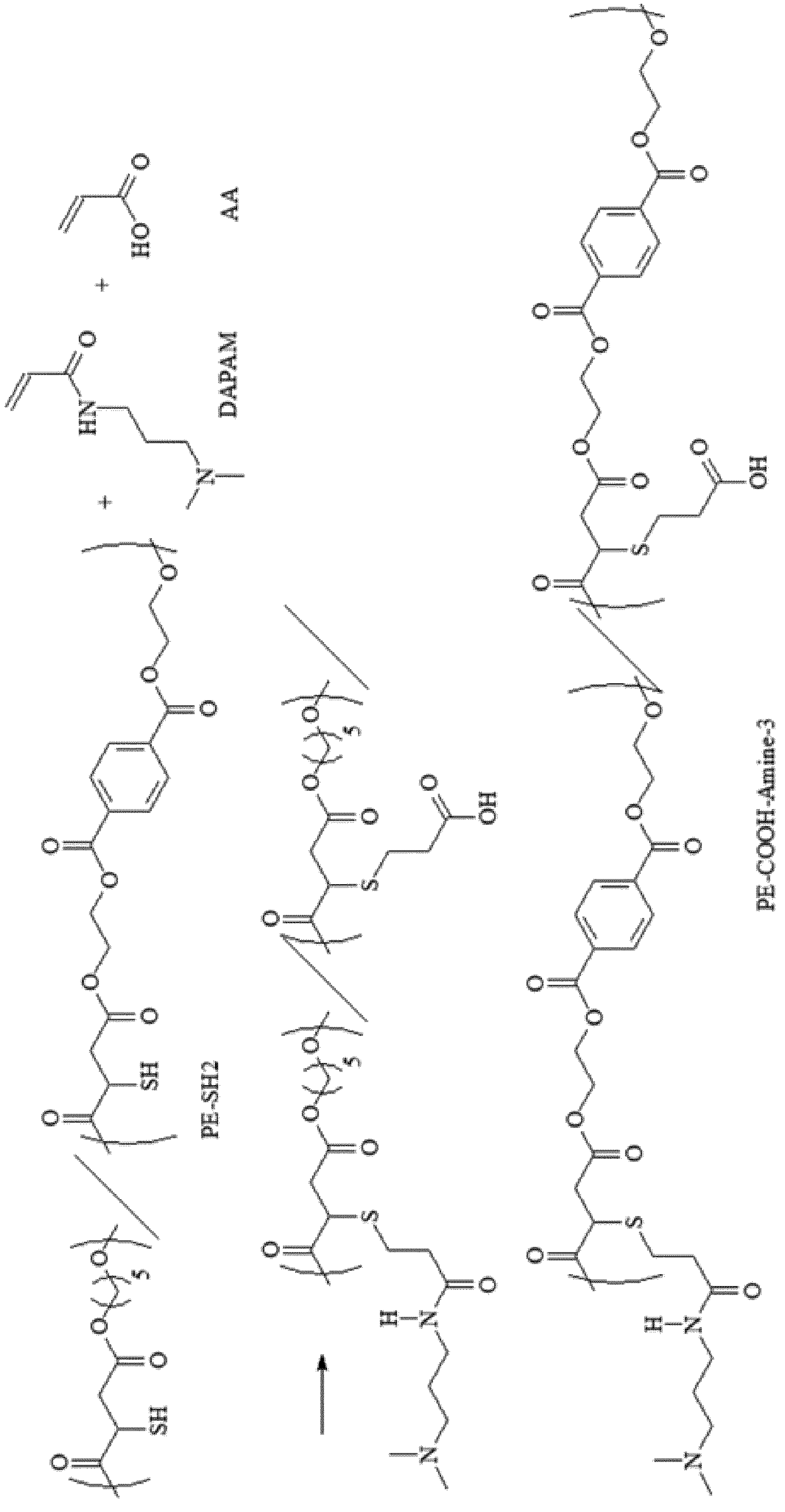

DAPAM

AA

PE-SH2

PE-COOH-Amine-3

Example 3

PE-COOH-Amine-3 (0.8 g) and 1,4-butanediol diglycidyl ether (BDE) (0.11 g) were separately dissolved in N-methyl pyrrolidone (NMP), and the solutions thereof were mixed in a polytetrafluoroethylene vessel. BDE was added in an amount that gave equimolar amounts of carboxy group and epoxy group. The NMP solution was left on a heater at 100°C for about 24 hours to volatilize the solvent. By performing vacuum drying at 100°C for 7 hours, the solution was dried such that the solvent was completely volatilized. The obtained dried sample was heated under vacuum at 130°C for 1 hour, then heated at 140°C for 1 hour, and subsequently heated at 150°C for 3 hours to obtain a thermally crosslinked product.

Example 4

A target product (PE-COOH-Amine-4) was obtained by adding the thiol group of PE-SH2 to acrylic acid (AA) and N-[3-(dimethylamino)propyl]acrylamide (DAPAM) in the same manner as Production Example 4, except that the use amounts of AA and DAPAM were changed. The number-average molecular weight (Mn) of PE-COOH-Amine-4 was 4269 g/mol, carboxy group: tertiary amino group was 50:50, and the acid value was 97.2 mg KOH/g. A thermally crosslinked product was obtained in the same manner as Example 3, except that the obtained PE-COOH-Amine-4 was used.

For the crosslinked products obtained in Example 3 and Example 4, (2) temperature-dispersion viscoelasticity was measured, (4) a linear expansion coefficient was measured, and (5) a stress relaxation test was performed.

(2) Temperature-Dispersion Viscoelasticity

Temperature-dispersion viscoelasticity was measured in a temperature decrease mode in the temperature range from 190°C to 20°C using MCR302 (manufactured by Anton Paar Gmbh). The measurement was performed at a temperature change rate of 5°C/min in an $N_2$ gas atmosphere. The measurement frequency was 1 Hz and the strain was 0.1%. The measurement sample used had a disk shape with a diameter of 8 mm and a thickness of 0.5 mm.

FIG. 9 shows the temperature dependence of a storage elastic modulus (G') and a loss tangent tan$\delta$ of the crosslinked product obtained in Example 3 or Example 4. In FIG. 9, each solid line shows the temperature dependence of the storage elastic modulus (G'), and each dashed line shows the temperature dependence of the loss tangent tan$\delta$. In Example 3 and Example 4, a tan$\delta$ peak ($\alpha$ relaxation peak) derived from segmental relaxation is seen in a region at about 50°C. On the lower temperature side of this peak region, the sample is in a glass state, and on the higher temperature side of this peak region, the sample is in a rubber state. The rubbery flat region is stable within the measurement temperature range, so that it is found that the crosslink density has not changed.

(4) Linear Expansion Coefficient

A linear expansion coefficient was measured in the range from room temperature to 200°C using TMA7100 (manufactured by Hitachi High-Tech Corporation). The measurement was performed at a temperature change rate of 10°C/min in an $N_2$ gas atmosphere. The sample used was a strip sample with a width of 4 mm, a thickness of 0.5 mm, and a length of 20 mm.

FIG. 10 shows the results of the linear expansion coefficient test measurement for Example 3. The vertical axis indicates a sample length (L) normalized by a sample length at 100°C ($L_{100°C}$). On the higher temperature side of about 160°C, a deviation from linear extrapolation assuming constant elongation is observed, so that it is found that the sample is softened.

FIG. 11 shows the results of the linear expansion coefficient test measurement for Example 4. The vertical axis indicates a sample length (L) normalized by a sample length at 130°C ($L_{130°C}$). On the higher temperature side of about 160°C, a deviation from linear extrapolation assuming constant elongation is observed, so that it is found that the sample is softened. From these, it is found that bond exchange is activated even without catalyst addition.

(5) Stress Relaxation Test

A stress relaxation test was performed at a temperature of 100°C, 160°C, 170°C, or 180°C using MCR302 (manufactured by Anton Paar Gmbh). The test was performed in an $N_2$ gas atmosphere. The sample used was a disk-shaped sample with a diameter of 8 mm and a thickness of 0.5 mm.

FIG. 12 shows the results of the stress relaxation measurement for the crosslinked product of Example 3. The vertical axis indicates stress ($\sigma$) normalized by the initial stress ($\sigma_0$), and the horizontal axis indicates elapsed time. It is found that at 160°C to 180°C, significant stress relaxation is observed, and the relaxation rate increases with increasing

temperature. This is due to the fact that bond exchange rate is increased with increasing temperature. On the other hand, in the stress relaxation curve at 100°C for the crosslinked product of Example 3 shown in FIG. 12, stress relaxation has not proceeded. The linear expansion coefficient test suggests that bond exchange is activated at a temperature of about 160°C or higher, so that it is found that bond exchange is frozen at 100°C.

FIG. 13 shows the results of the stress relaxation measurement for the crosslinked product of Example 4. The vertical axis indicates stress ($\sigma$) normalized by the initial stress ($\sigma_0$), and the horizontal axis indicates elapsed time. It is found that at 160°C to 180°C, significant stress relaxation is observed, and the relaxation rate increases with increasing temperature. This is due to the fact that bond exchange rate is increased with increasing temperature. On the other hand, in the stress relaxation curve at 100°C for the crosslinked product of Example 4 shown in FIG. 13, stress relaxation has not proceeded. The linear expansion coefficient test suggests that bond exchange is activated at a temperature of about 160°C or higher, so that it is found that bond exchange is frozen at 100°C.

The relaxation times at each temperature for the crosslinked products of Examples 3 and 4 are summarized in Table 2 below. From these, it is found that bond exchange proceeds sufficiently fast even without catalyst addition.

[Table 2]

| | **Example 3** | **Example 4** |
|---|---|---|
| **160°C** | **197 sec** | **477 sec** |
| **170°C** | **142 sec** | **380 sec** |
| **180°C** | **49 sec** | **198 sec** |

For the crosslinked products obtained in Examples 1 to 4 and Comparative Example 1, (7) a softening temperature was measured, (8) scratch repair properties were evaluated, (9) molding processability was evaluated, and (10) extrudability was evaluated. The softening temperature, the evaluation results of scratch repair properties, the evaluation results of molding processability, and the evaluation results of extrudability are shown in Table 3 below.

(7) Softening Temperature

The softening temperature was determined from the inflection point of linear expansion coefficient change of the sample from room temperature to 300°C using "TMA7100" manufactured by Hitachi High-Tech Corporation. The measurement was performed in a nitrogen gas atmosphere with a minute constant tension (30 mN) applied in order to prevent deflection of the sample. The initial distance between jigs was 15 mm. If an inflection point was able to be observed, the corresponding temperature was recorded.

(8) Scratch Repair Property

A crosslinked polyester resin film having a length of 1.5 cm, a width of 1.5 cm, and a thickness of 0.7 mm was produced from a crosslinked product, and a scratch (depth: about 0.1 mm) was made on the surface of the obtained crosslinked polyester resin film using a cutter. Then, the crosslinked polyester resin film was subjected to a heat treatment process. As the heat treatment process, the crosslinked polyester resin film was left at a high temperature (softening temperature + about 20°C) for 10 minutes and was allowed to cool to room temperature.

The scratch repair properties (self-repair properties) were evaluated as good (evaluation: o) when the scratch disappeared and the film became a crosslinked aromatic polyester resin film having no scratch on the surface thereof after the heat treatment process, and the scratch repair properties (self-repair properties) were evaluated as poor (evaluation: ×) when the scratch remained after the heat treatment process.

(9) Molding Processability

A sample was prepared by cutting each of the crosslinked polyester resin film (thickness of 0.7 mm) produced from the crosslinked product into a shape having width of 5 mm and a length of 5 mm, and the obtained sample was packed in a mold. As the mold, one made by cutting out a circle having a diameter of 8 mm from a Teflon (registered trademark) sheet having a thickness of 1 mm was used. Then, the mold was pressurized and heated in a heat press machine. The pressurization condition was set to 4 MPa, and the heating condition was set to softening temperature +30°C, 15 min.

When the crosslinked polyester resin film piece could be formed into the mold shape, the molding processability was evaluated as good (evaluation O), and when the crosslinked polyester resin film piece could not be molded into the

mold shape, the molding processability was evaluated as poor (evaluation ×).

(10) Extrudability

A sample was prepared by cutting 6g of each of the crosslinked polyester resin film (thickness of 0.7 mm) produced from the crosslinked product into a shape having width of 5 mm and a length of 5 mm, and the sample was fed in three separate parts at a barrel temperature of 170°C into a twin-screw extruder "MiniLab" manufactured by HAAKE. After the sample feeding was completed, the sample was kneaded at a screw rotation speed of 50 $min^{-1}$ for 5 minutes, and then the kneaded material was extruded from the barrel.

After kneading, when the kneaded material was successfully discharged to obtain a thread thread-like molded article, extrudability was evaluated as good (evaluation O), and when the kneaded material failed to be discharged and a thread thread-like molded article was not obtained, extrudability. was evaluated as poor (evaluation ×).

[Table 3]

| | Example 1 | Example 2 | Example 3 | Example 4 | Comparative Example 1 |
|---|---|---|---|---|---|
| **Softening temperature (°C)** | **150** | **150** | **160** | **170** | **>200** |
| **Scratch repair property** | ○ | ○ | ○ | ○ | × |
| **Molding processability** | ○ | ○ | ○ | ○ | ○ |
| **Extrudability** | ○ | ○ | ○ | ○ | × |

As is obvious from Table 3, the crosslinked products obtained in Examples 1 to 4 had low softening temperatures and exhibited characteristics such as scratch repair properties, molding processability, and extrudability. On the other hand, the crosslinked product obtained in Comparative Example 1 had good molding processability, but had a high softening temperature, and had poor scratch repair properties and extrudability.

INDUSTRIAL APPLICABILITY

The crosslinked polyester resin of the present invention can be applied to resin materials, film materials, elastomer materials, gel materials, etc., that are composed of polymers. In particular, the crosslinked polyester resin is advantageous in use in the presence of water and oil (tubes, gaskets, vehicle components, etc.), which have been considered unsuitable for bond-exchangeable resins.

**Claims**

**1.** A crosslinked polyester resin in which a polyester resin having a plurality of side chains each having a carboxy group and a plurality of side chains each having a tertiary amino group is crosslinked by an epoxy-based crosslinking agent having a plurality of epoxy groups.

**2.** The crosslinked polyester resin according to claim 1, wherein the number of carboxy groups of the side chains of the polyester resin in one molecule of the polyester resin is 3 to 80.

**3.** The crosslinked polyester resin according to claim 1 or 2, wherein a ratio of the number of tertiary amino groups of the side chains of the polyester resin to the number of carboxy groups of the side chains of the polyester resin (amino group: carboxy group) is 20:80 to 90:10.

**4.** The crosslinked polyester resin according to any one of claims 1 to 3, wherein the polyester resin is a polycondensate of a polyvalent carboxylic acid component (A) and a polyhydric alcohol component (B),

the polyester resin contains a nucleophilic reactive group-containing polyvalent carboxylic acid component (A3) as the polyvalent carboxylic acid component (A) and contains 50 mol% or more of the nucleophilic reactive group-containing polyvalent carboxylic acid component (A3) in 100 mol% of the polyvalent carboxylic acid component (A),
a part of the nucleophilic reactive group-containing polyvalent carboxylic acid component (A3) is Michael-added to an $\alpha,\beta$-unsaturated carboxylic acid (C3C), and

a part or entirety of the rest of the nucleophilic reactive group-containing polyvalent carboxylic acid component (A3) is Michael-added to a side chain compound (C3N) having a tertiary amino group.

**5.** The crosslinked polyester resin according to claim 4, wherein the polyhydric alcohol component (B) is at least one selected from aliphatic diols and aromatic polyester diols.

**6.** The crosslinked polyester resin according to any one of claims 1 to 5, wherein the epoxy-based crosslinking agent having a plurality of epoxy groups is an aliphatic diol diglycidyl ether.

**7.** The crosslinked polyester resin according to any one of claims 1 to 6, wherein a peak of temperature change of a loss tangent tanδ is in a range of 0 to 100°C.

**8.** The crosslinked polyester resin according to any one of claims 1 to 7, wherein a relaxation time at a temperature of 160°C determined from a stress relaxation curve is 1 to 2000 seconds.

**9.** The crosslinked polyester resin according to any one of claims 1 to 8, wherein an amount of a transesterification catalyst is less than 1 part by mass per 100 parts by mass of the polyester resin, and an amount of an epoxy-based crosslinking agent having a tertiary amino group is less than 30 parts by mole per 100 parts by mole of the epoxy-based crosslinking agent having a plurality of epoxy groups.

**10.** A polyester resin having a plurality of side chains each having a carboxy group and a plurality of side chains each having a tertiary amino group.

[FIG.1]

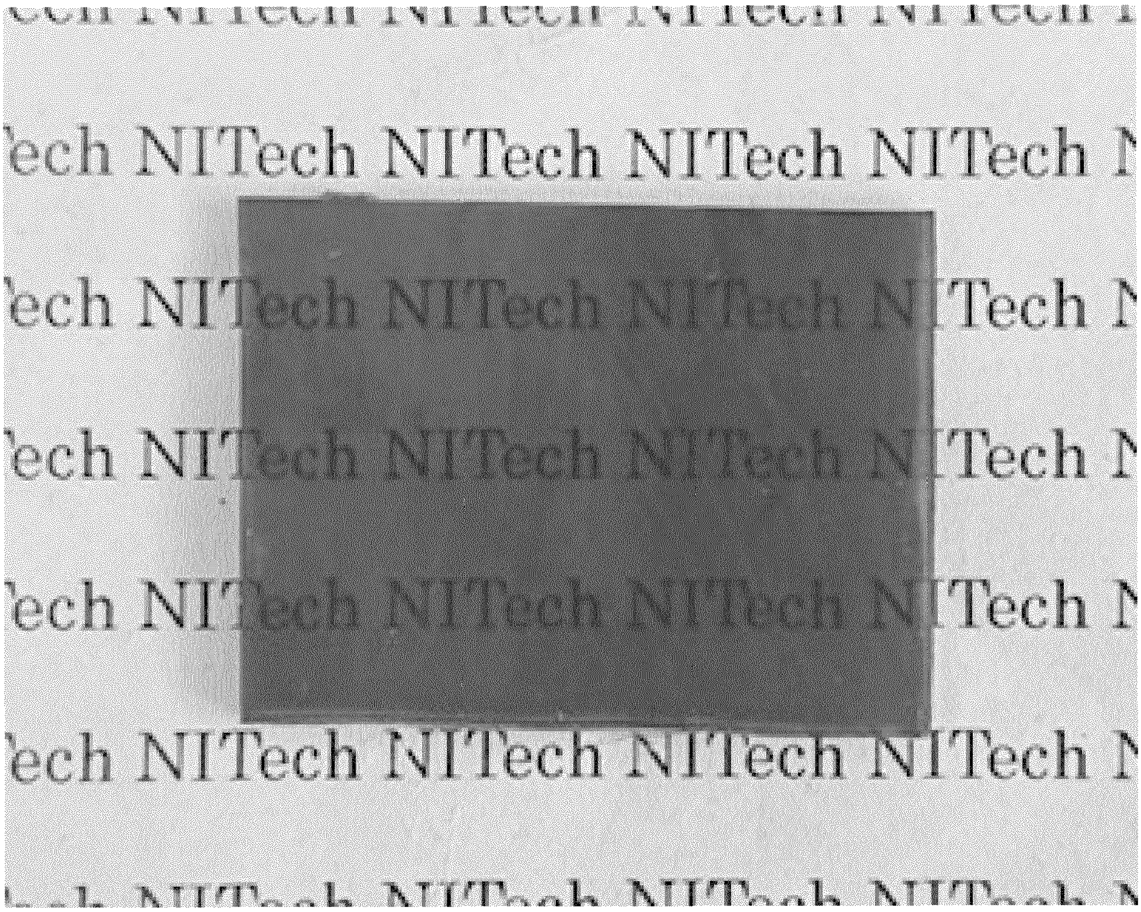

[FIG.2]

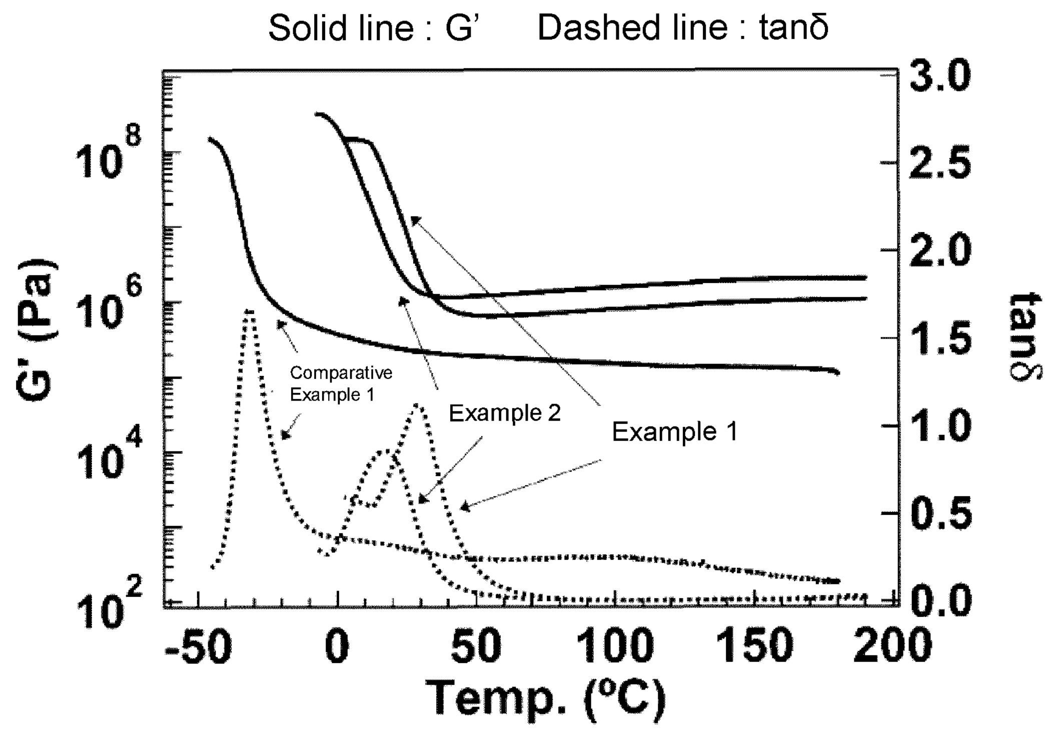
Solid line : G'   Dashed line : tanδ
G' (Pa)
10^8
10^6
10^4
10^2
tanδ
3.0
2.5
2.0
1.5
1.0
0.5
0.0
-50
0
50
100
150
200
Temp. (°C)
Comparative Example 1
Example 2
Example 1

[FIG.3]

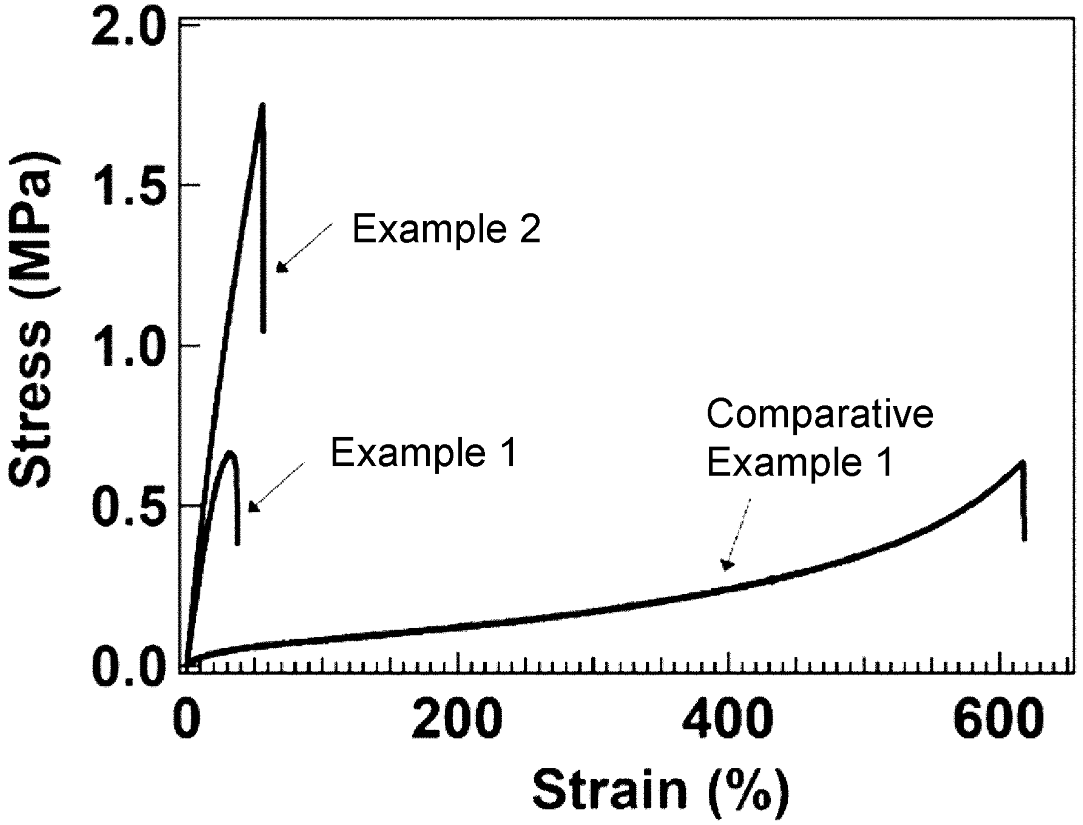
Stress (MPa)
2.0
1.5
1.0
0.5
0.0
Example 2
Example 1
Comparative Example 1
0
200
400
600
Strain (%)

[FIG.4]

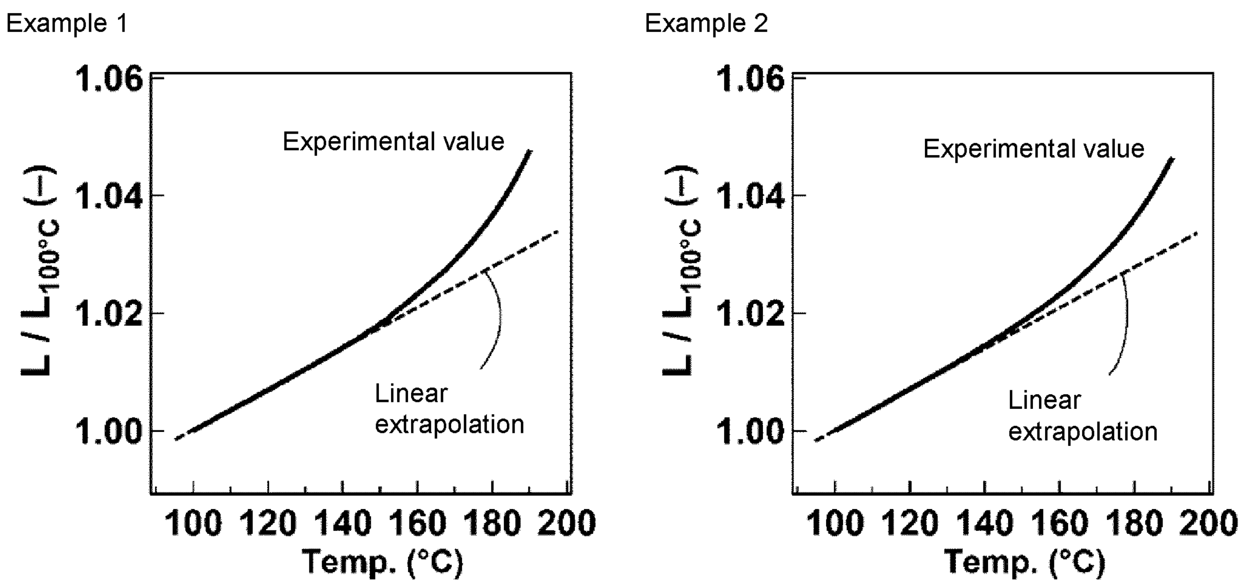
Example 1
Example 2
1.06
1.04
1.02
1.00
L / $L_{100°C}$ (–)
Experimental value
Linear extrapolation
100 120 140 160 180 200
Temp. (°C)

[FIG.5]

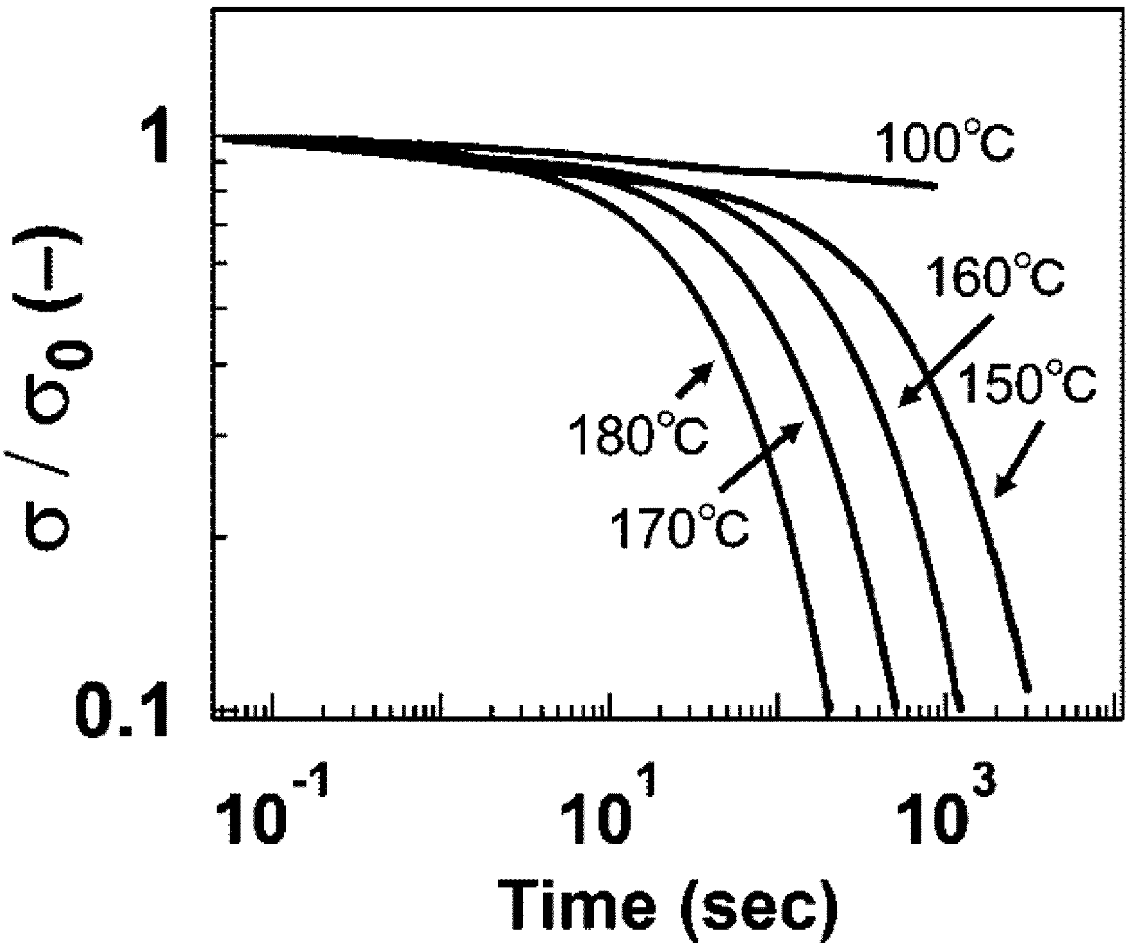

[FIG.6]

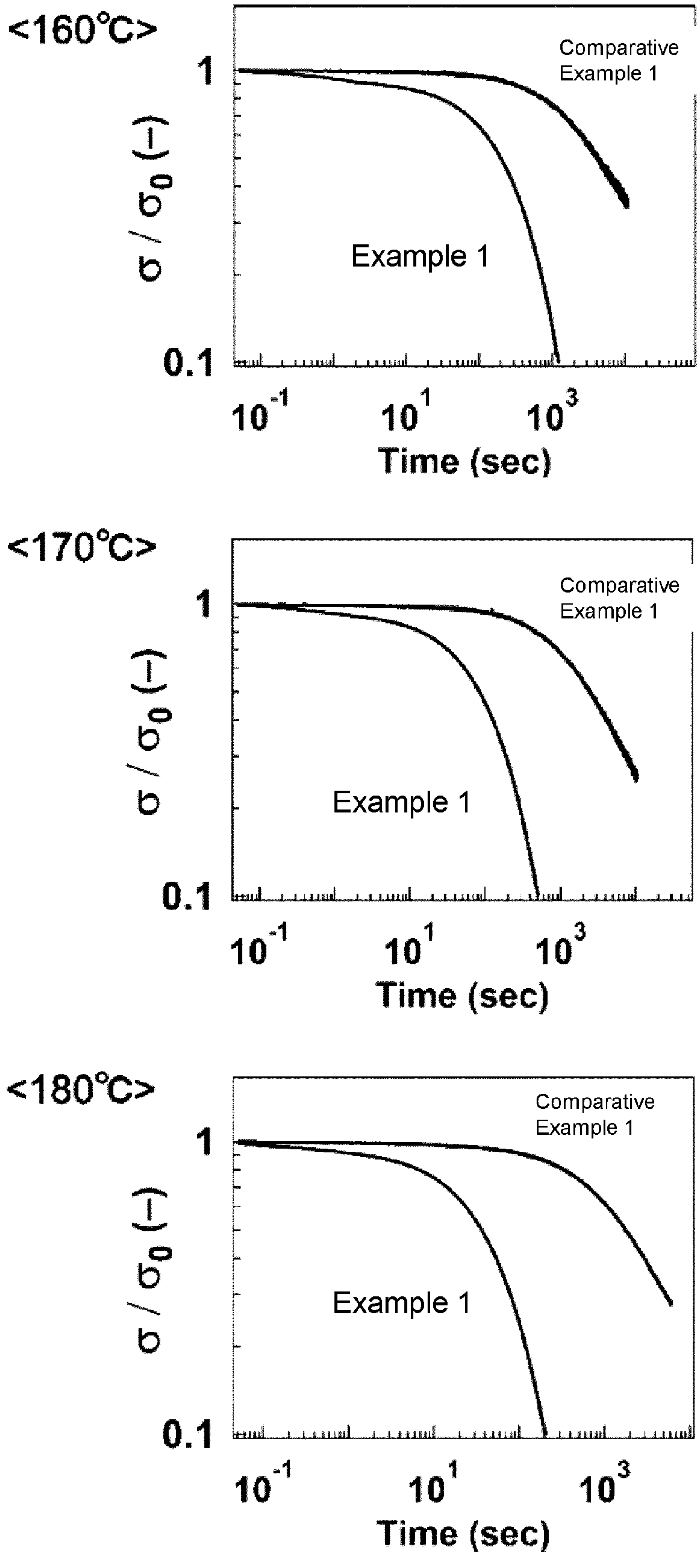
<160℃>
1
0.1
σ / σ0 (–)
Comparative Example 1
Example 1
10-1
10^1
10^3
Time (sec)
<170℃>
1
0.1
σ / σ0 (–)
Comparative Example 1
Example 1
10-1
10^1
10^3
Time (sec)
<180℃>
1
0.1
σ / σ0 (–)
Comparative Example 1
Example 1
10-1
10^1
10^3
Time (sec)

[FIG.7]

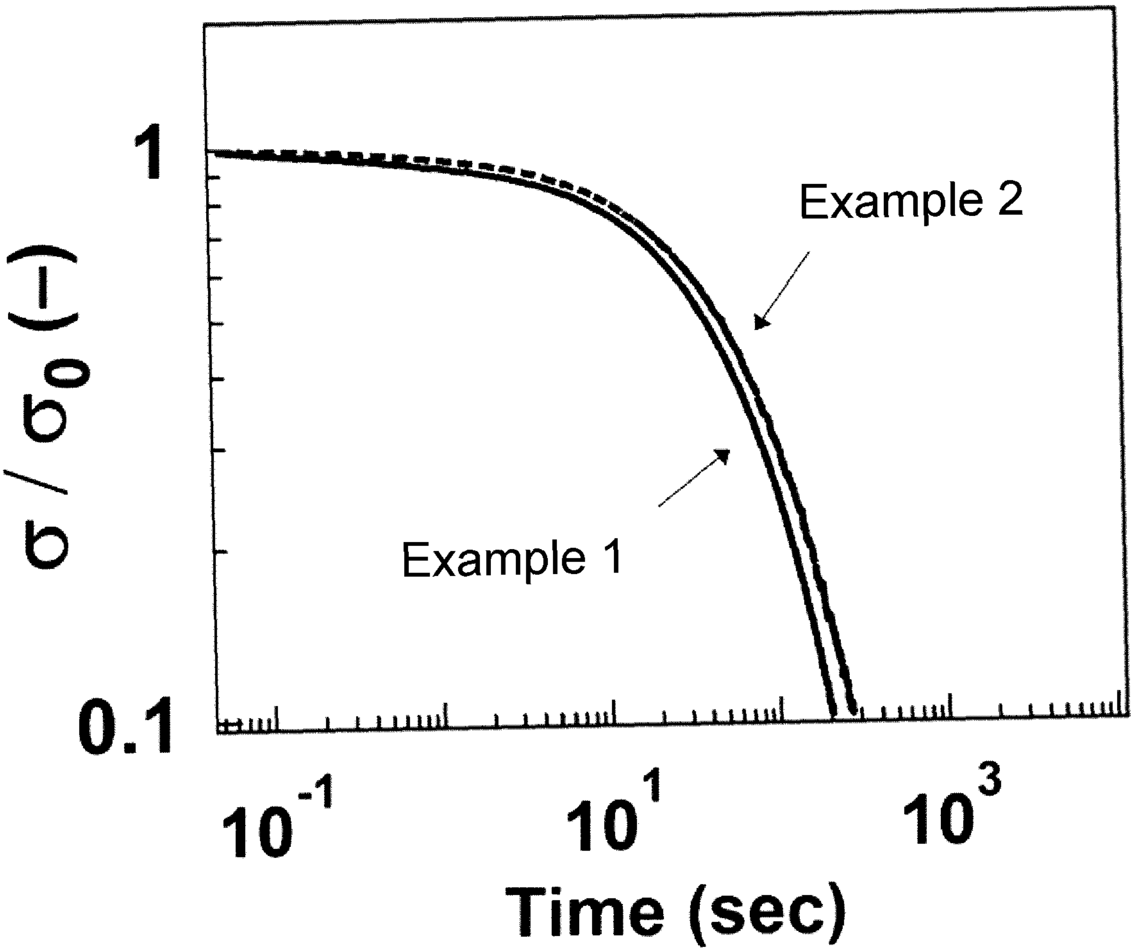
1
0.1
σ / σ0 (–)
Example 2
Example 1
10-1
101
103
Time (sec)

[FIG.8]

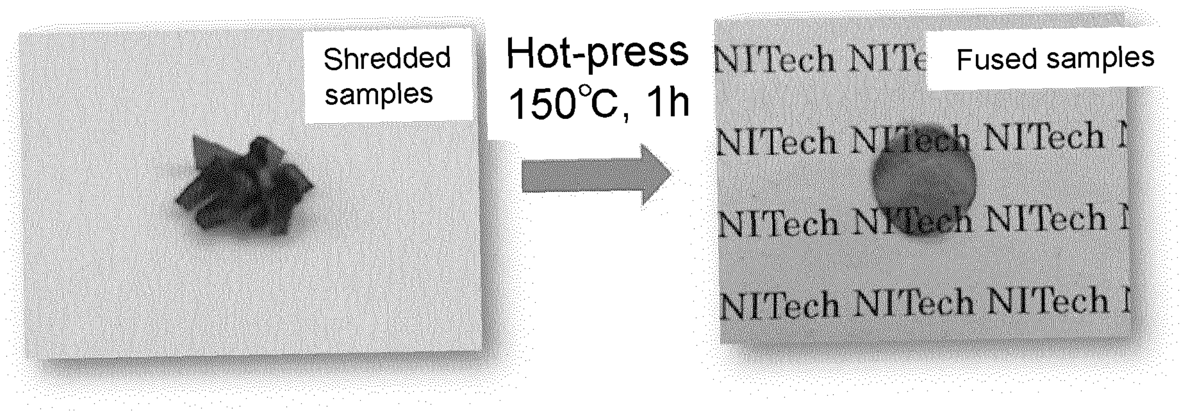
Shredded samples
Hot-press 150°C, 1h
Fused samples
NITech

[FIG.9]

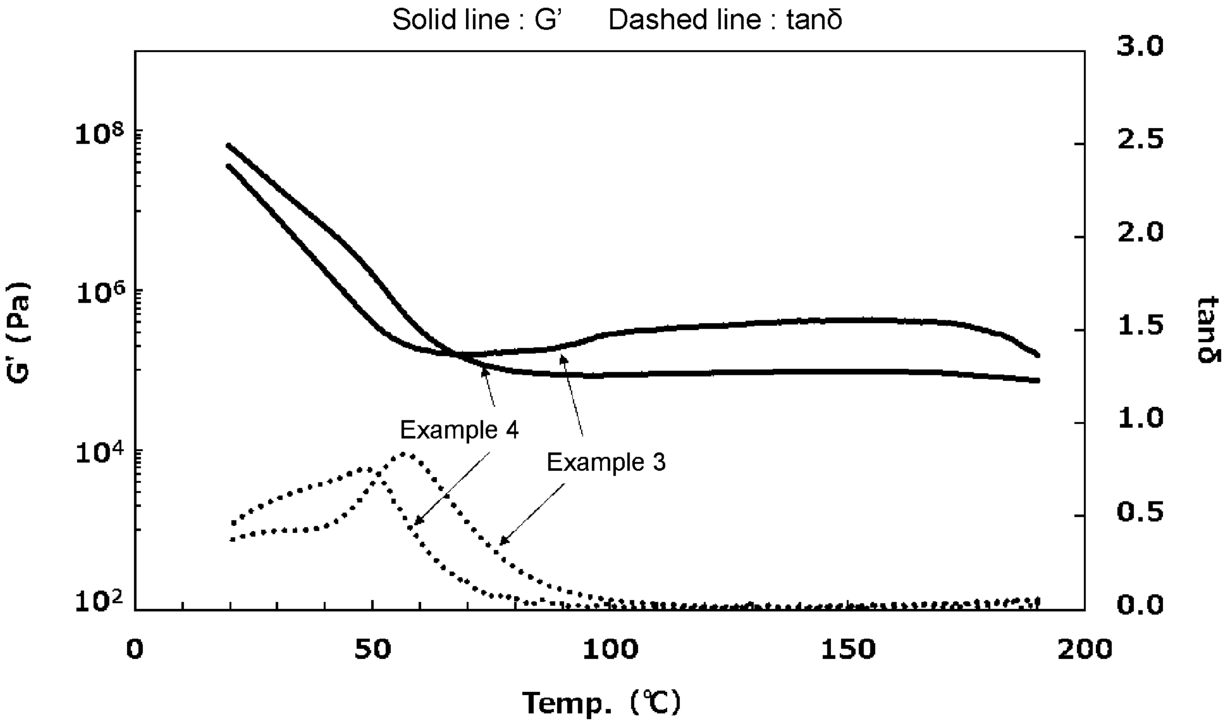
Solid line : G'   Dashed line : tanδ
G' (Pa)
10⁸
10⁶
10⁴
10²
tanδ
3.0
2.5
2.0
1.5
1.0
0.5
0.0
0
50
100
150
200
Temp. (℃)
Example 4
Example 3

[FIG.10]

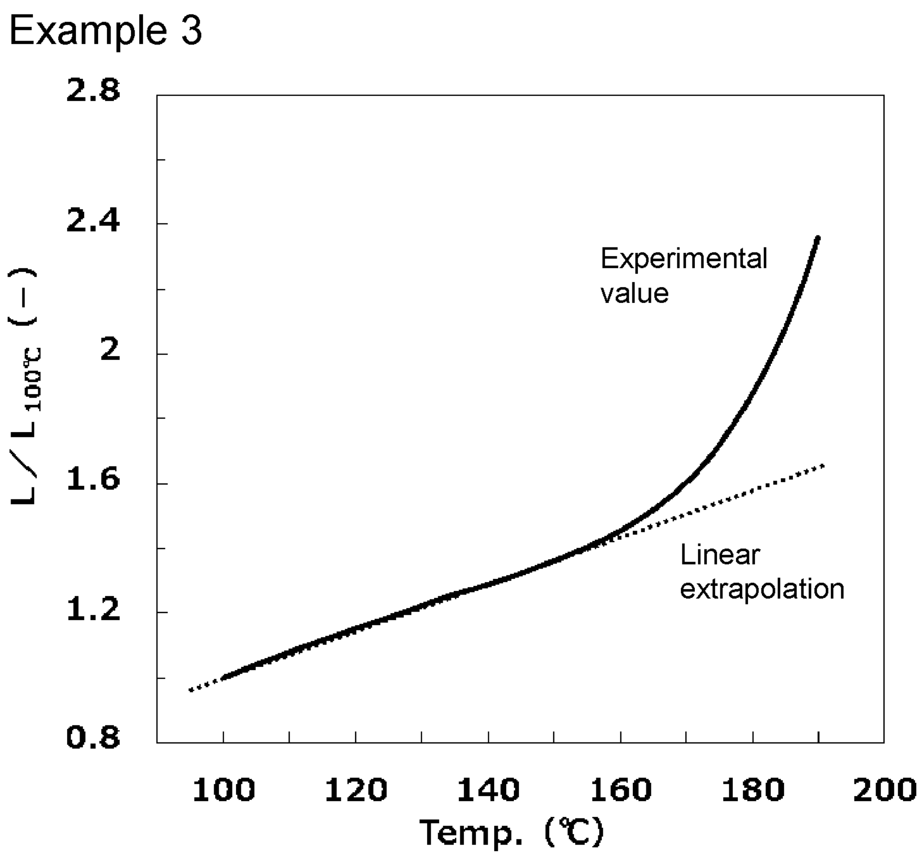
Example 3
L／L 100℃ (－)
2.8
2.4
2
1.6
1.2
0.8
100
120
140
160
180
200
Temp. (℃)
Experimental value
Linear extrapolation

[FIG.11]

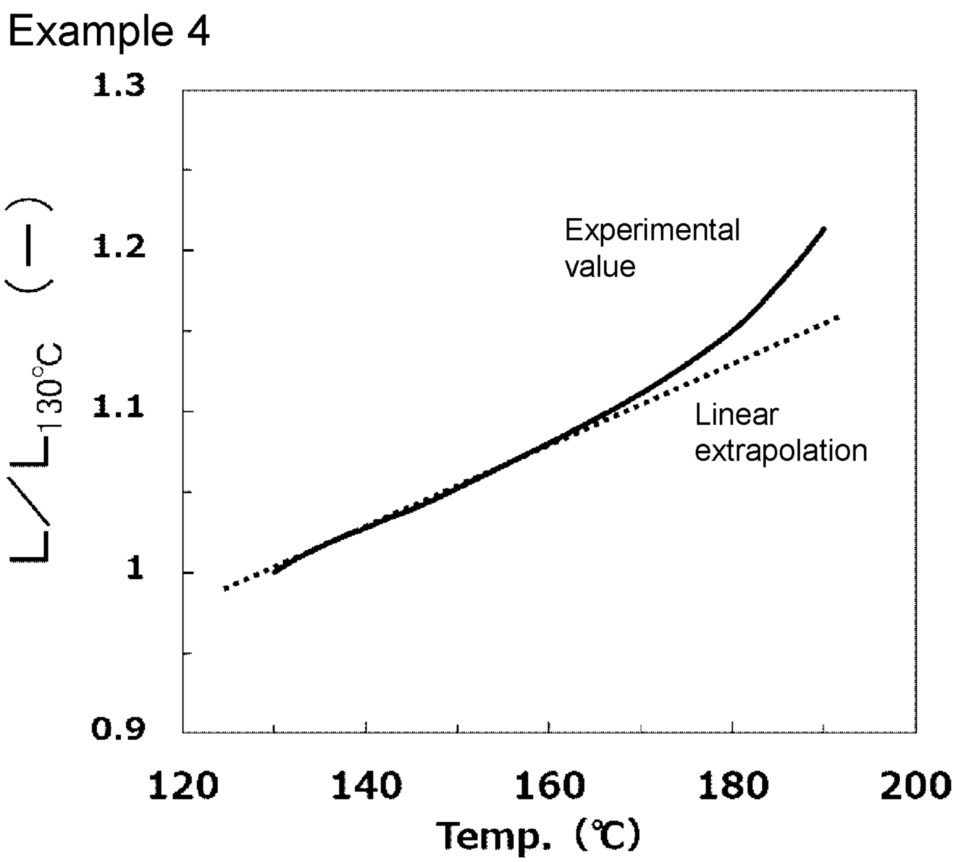
Example 4
1.3
1.2
1.1
1
0.9
L／L130℃ （－）
Experimental value
Linear extrapolation
120
140
160
180
200
Temp. (℃)

[FIG.12]

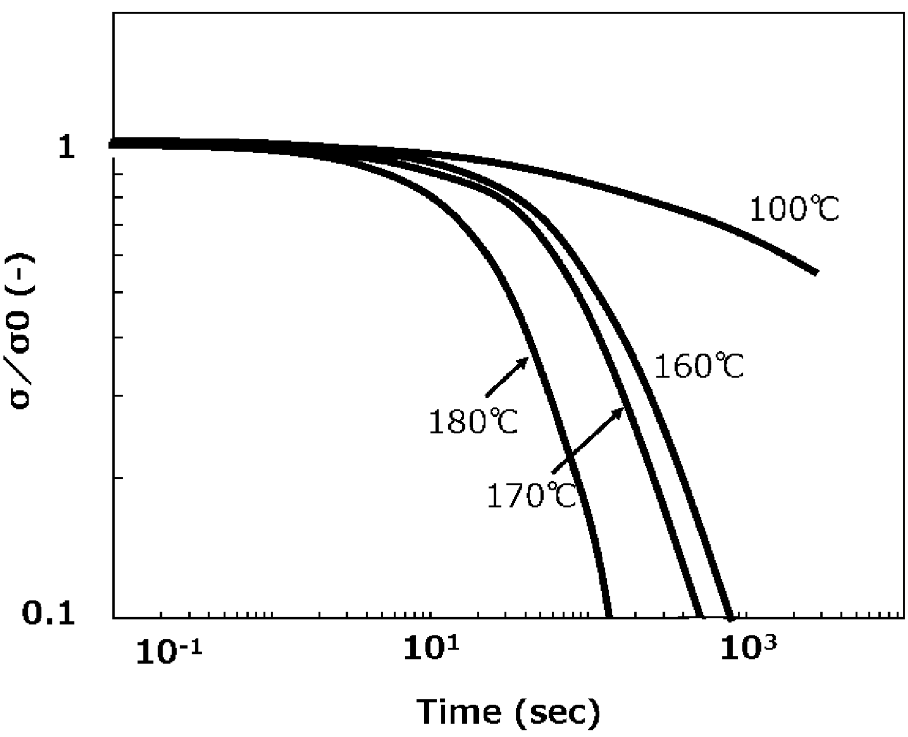
1
0.1
σ/σ0 (-)
100℃
160℃
180℃
170℃
10-1
101
103
Time (sec)

[FIG.13]

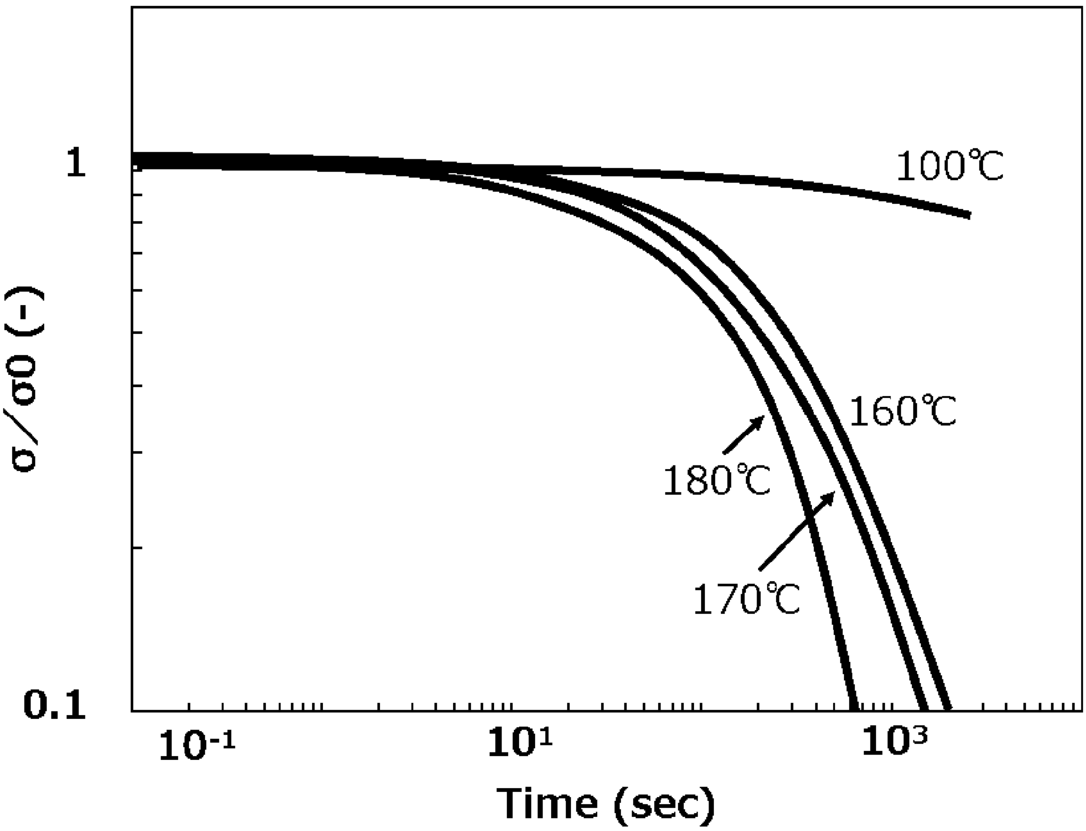

**INTERNATIONAL SEARCH REPORT**

International application No. **PCT/JP2022/010626**

**A. CLASSIFICATION OF SUBJECT MATTER**

***C08G 59/52***(2006.01)i; ***C08G 63/685***(2006.01)i; ***C08G 63/91***(2006.01)i
FI: C08G59/52; C08G63/91; C08G63/685

According to International Patent Classification (IPC) or to both national classification and IPC

**B. FIELDS SEARCHED**

Minimum documentation searched (classification system followed by classification symbols)

C08G59/52; C08G63/685; C08G63/91

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 4-332723 A (HITACHI CHEM. CO., LTD.) 19 November 1992 (1992-11-19) claims 1-8, paragraphs [0013], [0022], [0025], [0030], [0031], example 1, comparative examples 1, 2 | 1-3, 6-10<br>4, 5 |
| A | WO 2020/045439 A1 (NAGOYA INST. OF TECHNOLOGY) 05 March 2020 (2020-03-05) entire text | 1-10 |
| A | JP 2019-189851 A (NAGOYA INST. OF TECHNOLOGY) 31 October 2019 (2019-10-31) entire text | 1-10 |
| A | JP 2021-45719 A (NAGOYA INST. OF TECHNOLOGY) 25 March 2021 (2021-03-25) entire text | 1-10 |
| A | JP 6-239983 A (DAINIPPON INK & CHEM., INC.) 30 August 1994 (1994-08-30) entire text | 1-10 |
| A | JP 51-125127 A (TOYO BOSEKI KK) 01 November 1976 (1976-11-01) entire text | 1-10 |

☐ Further documents are listed in the continuation of Box C.　☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **31 March 2022** | **12 April 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2022/010626**

| Patent document cited in search report | Publication date (day/month/year) | Patent family member(s) | Publication date (day/month/year) |
|---|---|---|---|
| JP 4-332723 A | 19 November 1992 | (Family: none) | |
| WO 2020/045439 A1 | 05 March 2020 | (Family: none) | |
| JP 2019-189851 A | 31 October 2019 | (Family: none) | |
| JP 2021-45719 A | 25 March 2021 | (Family: none) | |
| JP 6-239983 A | 30 August 1994 | (Family: none) | |
| JP 51-125127 A | 01 November 1976 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2021079856 A


### Non-patent literature cited in the description


- **MIKIHIRO HAYASHI et al.** *Polymer Chemistry,* 2019, vol. 10 (16), 2047-2056
- **MIKIHIRO HAYASHI.** *ACS Applied Polymer Materials,* 2020, vol. 2 (12), 5365-5370